# EUROPÄISCHE PATENTSCHRIFT

(11) **EP 3 743 291 B1**
(45) Veröffentlichungstag und Bekanntmachung des Hinweises auf die Patenterteilung: **04.05.2022**
(21) Anmeldenummer: 19704730.1
(22) Anmeldetag: 18.01.2019
(51) Int. Cl.: B60B 15/26, B60B 19/00, B60B 11/10

(54) **NOTLAUFRAD**
EMERGENCY WHEEL
ROUE D'URGENCE

(30) Priorität: 22.01.2018 DE 102018101355
(43) Veröffentlichungstag der Anmeldung: 02.12.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2019/051264
(87) Internationale Veröffentlichungsnummer: WO 2019/141816

(56) Entgegenhaltungen:
- EP-A1- 0 606 946
- EP-A1- 2 048 003
- EP-B1- 2 048 003
- WO-A1-01/38106
- US-A- 2 989 347
- US-A- 3 112 784
- US-A- 6 068 346

## Beschreibung

Die vorliegende Erfindung betrifft einen Aufsatz für ein Fahrzeugrad zur Ermöglichung eines Fahrbetriebs bei eingeschränkter Reifenfunktion nach dem Oberbegriff des Anspruchs 1. Ein gattungsgemäßer Aufsatz für ein Fahrzeugrad ist aus der EP 2 048 003 A1 bekannt.

Mit einem Fahrzeugrad ist vorliegend ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Einsatzgebiet der vorliegenden Erfindung ist die Ermöglichung einer Fahrt mit plattem Reifen.

Bei am Fahrzeugrad angebrachtem Aufsatz ist mit axialer Richtung vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise ein Lochkreis der Felge mit einer Mittenöffnung des Fahrzeugrades, wobei vorliegend mit dem Lochkreis des Fahrzeugrades die Anordnung der Löcher in der Felge, die zur Aufnahme von Radschrauben bzw. Stehbolzen vorgesehen sind, samt Mittenöffnung gemeint ist.

Mit Umfangsrichtung ist die Richtung entlang des Umfangs des Fahrzeugrades, also entlang seiner Reifenlauffläche, gemeint.

Aufgabe der vorliegenden Erfindung ist es, einen Aufsatz für ein Fahrzeugrad bereitzustellen, der sich einfach, schnell und sicher montieren lässt, insbesondere soll der Aufsatz einer Fehlmontage vorbeugen.

Diese Aufgabe wird durch einen Aufsatz gemäß Anspruch 1 gelöst.

Der erfindungsgemäße Aufsatz ist also ein Aufsatz für ein Fahrzeugrad, das eine Felge umfasst, zur Ermöglichung eines Fahrbetriebs bei eingeschränkter Reifenfunktion, wobei der Aufsatz einen Laufflächenabschnitt, der eine Lauffläche des Aufsatzes umfasst, aufweist, und wobei der Aufsatz wenigstens ein Spannmittel umfasst, das ausgebildet ist, um einen Abschnitt, vorzugsweise ein Felgenhorn, der Felge zu hintergreifen, wobei der Aufsatz einen Initialmontageabschnitt umfasst, wobei wenigstens ein Teil des Laufflächenabschnitts separat von dem Initialmontageabschnitt und mit diesem lösbar verbindbar ausgebildet ist oder gegenüber diesem beweglich ausgebildet ist, und wobei der Initialmontageabschnitt radial innenliegend von der Lauffläche angeordnet ist, wenn der Aufsatz am Fahrzeugrad befestigt ist.

Der Aufsatz weist einen Kontaktabschnitt auf, der dazu ausgebildet ist, das Spannmittel zu betätigen und in Hintergriff mit dem Abschnitt der Felge, vorzugsweise dem Felgenhorn, zu bringen, wenn der Kontaktabschnitt, betätigt, insbesondere mit einer Kraft beaufschlagt, wird, vorzugsweise wobei der Kontaktabschnitt auf der dem Fahrzeugrad zugewandten Seite des Aufsatzes angeordnet ist, wenn der Aufsatz am Fahrzeugrad befestigt ist. Hierdurch kann in einfacher Weise eine sichere Befestigung des Aufsatzes erreicht werden. Insbesondere wenn der Kontaktabschnitt auf der dem Fahrzeugrad zugewandten Seite des Aufsatzes angeordnet ist, kann beim Anbringen des Aufsatzes am Fahrzeugrad der Kontaktabschnitt quasi automatisch durch beispielsweise die Felge kontaktiert werden und hierdurch eine Kraft auf den Kontaktabschnitt ausgeübt werden, wodurch die Spannmittel im Hintergriff mit dem Abschnitt der Felge, vorzugsweise dem Felgenhorn, gebracht werden. Der Kontaktabschnitt ist vorzugsweise derart angeordnet und ausgebildet, dass die Kraft zur Betätigung wenigstens teilweise, vorzugsweise überwiegend in axialer Richtung gerichtet ist. Der Kontaktabschnitt ist vorzugsweise an dem Teil des Aufsatzes angeordnet, der das oder die Spannmittel umfasst. Vorzugsweise umfasst jedenfalls der Laufflächenabschnitt ein bzw. mehrere Spannmittel zum Hintergreifen des Felgenhorns und ein bzw. mehrere Kontaktabschnitte. Es ist auch möglich, dass der Inititalmontageabschnitt zusätzlich oder alternativ hierzu ein bzw. mehrere Spannmittel und ggf. ein bzw. mehrere Kontaktabschnitte umfasst.

Der Kontaktabschnitt ist am Laufflächenabschnitt angeordnet und derart ausgebildet und angeordnet, dass er beim Anbringen des Laufflächenabschnitts am Fahrzeugrad das Fahrzeugrad, insbesondere die Felge des Fahrzeugrads, oder den Initialmontageabschnitt kontaktiert und durch diesen Kontakt betätigt wird. Alternativ ist am Initialmontageabschnitt ein Kontaktabschnitt derart angeordnet und ausgebildet, dass er beim Anbringen des Initialmontageabschnitts am Fahrzeugrad das Fahrzeugrad, insbesondere die Felge des Fahrzeugrads, kontaktiert und durch diesen Kontakt betätigt wird. Hierdurch kann quasi eine automatische spannende Befestigung des jeweiligen Teils des Abschnitts am Felgenhorn erfolgen, wenn Initialmontageabschnitt und Laufflächenabschnitt bzw. ein Teil des Laufflächenabschnitts am Fahrzeugrad angebracht werden. Die entsprechende Montage gestaltet sich daher sehr einfach und sicher.

Vorzugsweise ist der Aufsatz derart ausgebildet, dass der Initialmontageabschnitt und der Laufflächenabschnitt, also der die Lauffläche des Aufsatzes umfassende Teil des Aufsatzes, separat und vollständig voneinander lösbar ausgebildet sind. Vorzugsweise umfasst der Laufflächenabschnitt wiederum wenigstens zwei voneinander lösbare umfängliche Segmente, die derart zusammensetzbar sind, dass sie die kreisförmige Lauffläche bilden.

Vorzugsweise ist das Spanmittel komplementär zu der nach DIN 7817 genormten Kontur des Felgenhorns ausgebildet. In der Regel ist dies bei PKW die Form J der DIN 7817.

Vorzugsweise weist der Aufsatz einen Laufflächenabschnitt mit genau zwei umfänglichen Segmenten auf, die insbesondere beide eine umfängliche Erstreckung von 180° aufweisen, insbesondere im Wesentlichen baugleich sind, vorzugsweise identische Grundelemente, die als Gussteile ausgebildet sind, umfassen. Vorzugsweise sind an jedem dieser beiden umfänglichen Segmenten genau zwei Spannmittel, die jeweils als schwenkbare Hakenelemente ausgebildet sind, angeordnet. Vorzugsweise weist jedes der Hakenelemente eine Erstreckung in Umfangsrichtung von wenigstens 30mm, vorzugsweise 40mm, insbesondere 50mm auf.

Vorzugsweise sind die Spannmittel als Fertigteil ausgebildet, das an die Grundelemente der umfänglichen Segmente angeschraubt ist.

Wenn der Laufflächenabschnitt, wie oben erwähnt, mehrere umfängliche Segmente, beispielsweise das oben erwähnte erste umfängliche Segment und das zweite umfängliche Segment umfasst, so ist es vorteilhaft, wenn an deren Kontaktflächen zueinander eine Verbindungseinrichtung, vorzugsweise um die umfänglichen Segmente derart miteinander zu verbinden, dass sie in axialer Richtung nicht gegeneinander verschiebbar sind, angeordnet ist. Die Verbindungseinrichtung kann beispielsweise über ein, über eine Feder, vorgespanntes Element ausgeführt sein, das in einem der umfänglichen Segmente angeordnet ist und in umfänglicher Richtung federnd gelagert aus der Kontaktfläche hinaussteht. An dem anderen umfänglichen Segment ist eine entsprechende Ausnehmung angeordnet, in die das federvorgespannte Element eingreifen kann.

Nachdem das erste umfängliche Segment an dem Initialmontageabschnitt befestigt wurde, kann bspw. das zweite umfängliche Segment in axialer Richtung aufgeschoben werden. Wenn die beiden Kontaktflächen übereinander gleiten, so wird das federvorgespannte Element in Umfangsrichtung in das erste umfängliche Segment hinein gedrängt, wobei das federvorgespannte Element dann in die Ausnehmung am zweiten umfänglichen Segment eingreift, wenn das zweite umfängliche Segment in die vorgesehene Position vollständig in axialer Richtung aufgeschoben worden ist. Die Verbindungseinrichtung sichert die beiden umfänglichen Segmente des Laufflächenabschnitts gegen eine Verschiebung der beiden Segmente in axialer Richtung gegeneinander.

Vorzugsweise weist die Verbindungseinrichtung generell ein, insbesondere vorgespanntes, Element auf, das in einem umfänglichen Segment beweglich gelagert angeordnet ist, und sich in ein anderes umfängliches Segment erstreckt, wenn der Aufsatz am Fahrzeugrad befestigt ist.

Vorzugsweise weist das Hakenelement der Spannmittel eine nachgiebige Beschichtung auf.

Der Initialmontageabschnitt kann bspw. in Form von, bspw. drei, miteinander verbundenen und radial auswärts laufenden, vorzugsweise in Umfangsrichtung gleichmäßig verteilten, Streben ausgebildet sein.

Der Initialmontageabschnitt kann bspw. auch mit einem kreis- oder kreisscheibenförmigen Zentralabschnitt ausgebildet sein. Vorzugsweise erstrecken sich radial auswärts verlaufende Streben von diesem Zentralabschnitt aus.

Der Initialmontageabschnitt ist ein Teil des Aufsatzes, der ausgebildet ist, um vor dem Laufflächenabschnitt am Fahrzeugrad befestigt zu werden. Dabei kann der Laufflächenabschnitt bereits mit dem Initialmontageabschnitt verbunden sein. Beim Anbringen des Aufsatzes wird zunächst der Initialmontageabschnitt am Fahrzeugrad befestigt und anschließend der Laufflächenabschnitt befestigt bzw. in seiner endgültige Position gebracht und befestigt. Bei dem erfindungsgemäßen Aufsatz ist es also möglich, zunächst den Initialmontageabschnitt zu befestigen. Vorzugsweise ist der Initialmontageabschnitt ausgebildet, um im Bereich des Lochkreises an der Felge befestigt zu werden. Wie weiter unten noch im Detail ausgeführt werden wird, kann der Laufflächenabschnitt lösbar von dem Initialmontageabschnitt ausgebildet sein.

Vorzugsweise ist der Aufsatz derart ausgebildet, dass zuerst der Initialmontageabschnitt ohne den Laufflächenabschnitt am Fahrzeugrad befestigbar ist und der Laufflächenabschnitt, nachdem der Initialmontageabschnitt am Fahrzeugrad befestigt ist, an das Fahrzeugrad mit Initialmontageabschnitt abgebracht und an diesem befestigt wird. Der Laufflächenabschnitt kann auch, insbesondere unlösbar und, verschiebbar und/oder verschwenkbar mit dem Initialmontageabschnitt verbunden sein. Der Aufsatz kann bei der Montage in einem ersten Schritt mittels des Initialmontageabschnitts an der Felge des Fahrzeugrads befestigt werden. Gegebenenfalls kann der Aufsatz, insbesondere der Laufflächenabschnitt, dann zusätzlich, vorzugsweise am Initialmontageabschnitt und, Fahrzeugrad bzw. der Felge des Fahrzeugrads befestigt werden.

Die Befestigung des Initialmontageabschnitts und/oder des Laufflächenabschnitts ist vorzugsweise mittels eines am jeweiligen Abschnitt angeordneten Spannmittels möglich. Insbesondere kann das Spannmittel an dem Laufflächenabschnitt angeordnet sein. Hierdurch kann der Laufflächenabschnitt besonders sicher am Fahrzeugrad befestigt werden. Insbesondere kann das Spannmittel an dem Initialmontageabschnitt angeordnet sein. Hierdurch kann der Initialmontageabschnitt besonders sicher am Fahrzeugrad befestigt werden. Es ist auch möglich, dass sowohl am Laufflächenabschnitt als auch am Initialmontageabschnitt ein Spannmittel der oben genannten Art angeordnet ist. Es kann also der Laufflächenabschnitt wie auch der Initialmontageabschnitt ein Spannmittel aufweisen, das ausgebildet ist, um den Abschnitt, vorzugsweise das Felgenhorn, der Felge zu hintergreifen.

Ein derartiges Spannmittel, das am Initialmontageabschnitt angeordnet ist, ist vorzugsweise derart ausgeführt, dass es in radialer Richtung verschieblich am Initialmontageabschnitt angeordnet ist. Auf das Spannmittel wird weiter unten noch im Detail eingegangen.

Wie oben bereits erwähnt, so ist es bevorzugt, wenn der Laufflächenabschnitt in Umfangsrichtung gesehen wenigstens zwei Segmente, die jeweils einen Teil des Umfangs der Lauffläche umfassen, aufweist. Vorzugsweise sind die Segmente voneinander lösbar und/oder gegenüber einander verschwenkbar und/oder verschiebbar. Hierdurch lässt sich der Aufsatz besonders einfach am Fahrzeugrad montieren. Zunächst kann der Initialmontageabschnitt am Fahrzeugrad befestigt werden, wobei der Initialmontageabschnitt durch seine radiale Erstreckung, die geringer als die radiale Erstreckung des Laufflächenabschnitts ist, problemlos auch bei einem platten Reifen am Fahrzeugrad montierbar ist. Im Anschluss daran kann ein erstes Segment des Laufflächenabschnitts am Fahrzeugrad bzw. am Initialmontageabschnitt und am Fahrzeugrad befestigt werden. Das Fahrzeugrad mit dem daran befindlichen Initialmontageabschnitt und dem ersten Segment des Laufflächenabschnitts kann dann derart gedreht werden, dass das bereits am Fahrzeugrad befindliche Segment des Laufflächenabschnitts die Fahrbahn kontaktiert. Anschließend kann das weitere Segment des Laufflächenabschnitts ans Fahrzeugrad und den Initialmontageabschnitt angebracht und befestigt werden. Der Aufsatz ist dann vollständig montiert, wobei die Montage ohne Wagenheber oder Hebebühne und bei am Fahrzeug befestigten Fahrzeugrad problemlos möglich ist.

Vorteilhaft ist insbesondere, wenn das erste umfängliche Segment eine umfängliche Erstreckung von mehr als 180°, insbesondere von mehr als 190°, aufweist. Die umfängliche Erstreckung des ersten umfänglichen Segments von mehr als 180° bzw. mehr als 190° hat den Vorteil, dass das erste umfängliche Segment den überwiegenden Teil des Aufsatzes in umfänglicher Richtung bildet und damit in einfacher Weise stabil und fest am Fahrzeugrad angebracht werden kann. Insbesondere kann das erste umfängliche Segment kreisbogenartig ausgebildet sein und eine, vorzugsweise kreissehnenartig verlaufende, Strebe umfassen. Hierdurch ist eine besonders hohe Stabilität und einfache Anbringung des Aufsatzes am Fahrzeugrad gegeben. Ein derartiger Aufsatz mit einem ersten umfänglichen Segment und einem zweiten umfänglichen Segment kann auch einen oder mehrere Kontaktabschnitte umfassen, die der Felge zugewandt angeordnet sind.

Optional ist es auch möglich , wenn der Laufflächenabschnitt zwei umfängliche Segmente mit einer umfänglichen Erstreckung von 180° umfasst, wodurch die umfänglichen Segmente im Wesentlichen baugleich ausgeführt werden können und sehr kostengünstig herstellbar sind.

Das Spannmittel liegt in der Endposition vorzugsweise vollständig mit dem Hintergriffabschnitt formschlüssig an der Innenseite des Felgenhorns an. Durch eine optionale Beschichtung (z.B. Gummierung) des Spannmittels auf der dem Felgenhorn zugewandten Seite kann (Beschichtung wird komprimiert) eine Verpressung zwischen Spannmittel und Felgenhorn erreicht werden. Dadurch können dann die durch Beschleunigungs- und Bremsvorgänge hervorgerufenen Umfangskräfte besonders gut aufgenommen werden. Damit wird eine Relativbewegung zwischen Reserverad und Fahrzeugfelge besonders effizient vermieden.

Das Spannmittel weißt vorzugsweise allgemein eine reibungserhöhende und/oder komprimierbare Kontaktfläche, insbesondere mit einer Beschichtung, zur Kontaktierung des Felgenhorns auf.

Vorzugsweise ist das Spannmittel durch ein schwenkbar gelagertes Hakenelement mit einem Hintergriffabschnitt gebildet, wobei der Hintergriffabschnitt derart ausgebildet ist, dass er das Felgenhorn der Felge hintergreift, wenn das Spannmittel im Hintergriff mit dem Felgenhorn steht. Vorzugsweise ist an dem Hakenelement ein Betätigungsabschnitt angeordnet, der starr mit dem Hintergriffabschnitt verbunden ist, vorzugsweise einstückig mit diesem ausgebildet ist. Vorzugsweise ist der Betätigungsabschnitt radial einwärts bezüglich der Schwenkachse des Hakenelements angeordnet. Der Hintergriffabschnitt zum Hintergreifen des Felgenhorns kann bezüglich der Schwenkachse des Hakenelements radial auswärts angeordnet sein. Denkbar ist auch, dass der Hintergriffabschnitt zum Hintergreifen des Felgenhorns bezüglich der Schwenkachse des Hakenelements radial einwärts angeordnet ist. Das schwenkbar gelagerte Hakenelement stellt eine besonders robuste und einfach herzustellende Ausführungsform des Spannmittels dar, was den entsprechenden Aufsatz besonders günstig herstellbar und besonders wenig anfällig für Fehlfunktionen macht. Vorzugsweise ist das Hakenelement in eine Stellung vorgespannt, bspw. über eine Feder.

Vorzugsweise ist der Betätigungsabschnitt derart am Hakenelement angeordnet und ausgebildet, dass der Abstand seiner Oberfläche in einer zweiten radialen Richtung von der Schwenkachse aus gesehen in einer zweiten umfänglichen Richtung um die Schwenkachse herum kontinuierlich abnimmt. Der Betätigungsabschnitt ist vorzugsweise derart ausgebildet und angeordnet, dass in einer ersten Schwenkstellung des Hakenelements, in der das Hakenelement das Felgenhorn nicht hintergreift, ein zu einem Kontaktpartner, beispielsweise der Felge oder einem Kontaktelement, auf das später noch eingegangen werden wird, gerichteter erster Abschnitt des Betätigungsabschnitts den am weitesten von der Schwenkachse entfernten Teil des Betätigungsabschnitts bildet. Wobei in einer zweiten Schwenkstellung des Hakenelements, in der das Hakenelement mit dem Hintergriffabschnitt das Felgenhorn hintergreift, ein zu dem Kontaktpartner, beispielsweise der Felge oder dem Kontaktelement, gerichteter zweiter Abschnitt des Betätigungsabschnitts den am nächsten zur Schwenkachse gelegenen Teil des Betätigungsabschnitts bildet.

Vorzugsweise weist der Aufsatz ein Kontaktelement auf, an dem der Kontaktabschnitt angeordnet ist, wobei das Kontaktelement separat von dem Spannmittel ausgebildet ist und in axialer Richtung verschiebbar bzw. verschwenkbar an dem Aufsatz, insbesondere am Laufflächenabschnitt angeordnet ist. Hierdurch kann beispielsweise das Kontaktelement in axialer Richtung verschiebbar ausgebildet sein, wodurch eine Beschädigung der Felge möglichst vermieden wird, während das Spannmittel bzw. das Hakenelement verschwenkbar ist. Vorzugsweise sind Hakenelement und Kontaktelement derart angeordnet, dass das Kontaktelement beim Anbringen des Aufsatzes an der Felge die Felge mit dem Kontaktabschnitt kontaktiert, wodurch das Kontaktelement in axialer Richtung bezügliche des Aufsatzes verschoben wird und den Betätigungsabschnitt des Hakenelements kontaktiert, wodurch das Hakenelement verschwenkt und mit seinem Hintergriffabschnitt in Hintergriff mit dem Felgenhorn der Felge gebracht wird. Vorzugsweise ist das Kontaktelement derart ausgebildet, dass es in dem Zustand, in dem das Hakenelement mit dem Hintergriffabschnitt das Felgenhorn bereits hintergreift, das Hakenelement gegen ein Ausschwenken aus dieser Hintergriffstellung verriegelt. Denkbar ist auch, dass das Hakenelement einen Betätigungsabschnitt in Form eines Fortsatzes aufweist, der in eine Ausnehmung am Kontaktelement eingreift bzw. das Kontaktelement einen Fortsatz aufweist, der in eine Ausnehmung am Hakenelement eingreift.

Vorzugsweise sind das Kontaktelement und das Hakenelement getrennt voneinander ausgebildet.

Vorzugsweise sind das Kontaktelement und das Hakenelement zahnlos ausgebildet und wirken vorzugsweise durch einen direkten Kontakt miteinander zusammen. Mit zahnlos ist dabei gemeint, dass die beiden Elemente keine Verzahnung, wie bspw. bei einem Zahnrad oder einer Zahnstange aufweisen. Kontaktelement und Hakenelement wirken hierdurch besonders robust zusammen und lassen sich in einfacher Art und Weise montieren.

Vorzugweise sind das Kontaktelement und das Hakenelement derart ausgebildet, zueinander angeordnet und miteinander gekoppelt, dass eine translatorische Bewegung des Kontaktelements, die beim Anbringen des Aufsatzes am Fahrzeugrad durch einen Kontakt mit der Felge verursacht wird, eine Schwenkbewegung des Hakenelements verursacht.

Vorzugsweise umfasst der Aufsatz einen Verriegelungsmechanismus, der ausgebildet und angeordnet ist, um das Spannmittel, insbesondere dessen schwenkbar gelagertes Hakenelement, zu verriegeln, wenn es sich im Hintergriff mit dem Felgenhorn befindet, vorzugsweise wobei der Verriegelungsmechanismus ein, vorzugsweise vorgespanntes, insbesondere federvorgespanntes, Rastelement umfasst. Bevorzugt ist, wenn das Rastelement rastend in das Hakenelement eingreift oder das Hakenelement rastend in das Rastelement eingreift, wenn der Verriegelungsmechanismus das Spannmittel verriegelt. Hierdurch ist die Befestigung des Aufsatzes an der Felge besonders sicher. Insbesondere kann das Rastelement in Form eines, insbesondere über eine Feder, vorgespannten Bolzens ausgeführt sein, wobei das schwenkbar gelagerte Hakenelement beispielsweise eine Ausnehmung aufweisen kann, in die der federvorgespannte Bolzen eingreift und dieses verriegelt, wenn das Hakenelement in die Hintergriffstellung mit der Felge geschwenkt ist. Hierzu ist vorteilhafterweise diese Ausnehmung derart angeordnet, dass sie in der Hintergriffstellung über das Rastelement schwenkt, so dass das Rastelement in die Ausnehmung einfahren kann.

Vorzugsweise ist der Verriegelungsmechanismus ausgebildet, um mit einem Sicherungsabschnitt bei am Fahrzeugrad angebrachtem Aufsatz und sich drehendem Fahrzeugrad die Fahrbahn zu kontaktieren und dadurch den Sicherungsabschnitt zu betätigen, insbesondere mit einer radial einwärts gerichteten Kraft zu beaufschlagen, wobei der Verriegelungsmechanismus derart ausgebildet ist, dass ein Sicherungselement bei Betätigung des Sicherungsabschnitts in eine Sicherungsposition bewegt wird, in der es formschlüssig gehalten ist, vorzugsweise und aus der es nur mittels eines Werkzeugs lösbar ist, wobei das Sicherungselement in der Sicherungsposition das Spannmittel in der Hintergriffstellung mit dem Felgenhorn formschlüssig verriegelt. Hierdurch wird quasi automatisch sichergestellt, dass das Spannmittel verriegelt ist, wenn das Fahrzeugrad bewegt wird.

Vorzugsweise umfasst das Spannmittel eine Einschalung, insbesondere und ist als Fertigteil ausgebildet, wobei vorzugsweise in der Einschalung auch der Verriegelungsmechanismus angeordnet ist. Der Verriegelungsmechanismus und das Spannmittel, vorzugsweise und das Kontaktelement, können also, jedenfalls teilweise, in einer Einschalung angeordnet sein, die eine Art Gehäuse für diese Komponenten bildet. Bevorzugt ist, wenn diese Einschalung bzw. dieses Gehäuse mit den darin befindlichen Komponenten einzeln zusammenbaubar ist und dann die fertig vormontierte Einheit als Fertigteil an den Aufsatz, insbesondere an der Laufflächenabschnitt, montierbar ist.

Der Verriegelungsmechanismus umfasst vorzugsweise ein Rastelement, das derart ausgeführt ist, dass es in dem Zustand, in dem es das Hakenelement des Spannmittels verriegelt, vollständig in der Einschalung des Verriegelungsmechanismus eingefahren ist. Vorzugsweise ist das Rastelement derart angeordnet und ausgebildet, dass es mit einem Abschnitt aus der Einschalung heraus ragt, wenn das Hakenelement nicht in der Stellung ist, in der es das Felgenhorn hintergreift und das Hakenelement nicht durch das Rastelement verriegelt ist. Vorzugsweise ist das Rastelement stabartig ausgebildet und ein Ende verriegelt das Hakenelement während sein gegenüberliegendes Ende ggf. aus der Einschalung heraus ragt, wenn das stabartige Rastelement das Hakenelement nicht verriegelt. Vorzugsweise ist der herausragende Abschnitt mit einer Signalfarbe, beispielsweise Rot, ausgeführt. Der aus der Einschalung herausragende Abschnitt ist vorzugsweise von der dem Fahrzeugrad abgewandten Seite des Aufsatzes her, beim Blick in axialer Richtung A, sichtbar. Damit umfasst der Aufsatz eine optische Kontrolle, ob die Spannmittel vollständig in Hintergriff mit dem Felgenhorn geschwenkt sind.

Vorzugsweise umfasst der Initialmontageabschnitt wenigstens einen in axialer Richtung erstreckten, vorzugsweise zapfenartigen, Führungsvorsprung und der Laufflächenabschnitt umfasst wenigstens eine Führungsöffnung, die komplementär zu dem Führungsvorsprung ausgebildet ist, so dass, wenn der Initialmontageabschnitt bereits am Fahrzeugrad angebracht ist, der Laufflächenabschnitt bzw. ein Teil des Laufflächenabschnitts derart auf den Initialmontageabschnitt aufgesetzt werden kann, dass der Führungsvorsprung in die Führungsöffnung eingreift und eine axiale Montagebewegung des Laufflächenabschnitts gegenüber dem Initialmontageabschnitt und dem Fahrzeugrad durch den Eingriff des Führungsvorsprungs in die Führungsöffnung geführt ist. Hierdurch lässt sich der Laufflächenabschnitt in besonders einfacher und effizienter Art und Weise an das Fahrzeugrad ansetzen, wenn der Initialmontageabschnitt bereits am Fahrzeugrad befestigt ist. Es ist auch denkbar, dass der Initialmontageabschnitt eine oder mehrere Führungsöffnungen aufweist und der Laufflächenabschnitt entsprechende zapfenartige Führungsvorsprünge, die komplementär zu den Führungsöffnungen ausgebildet sind. Durch die komplementäre Ausbildung von Führungsöffnung und Führungsvorsprung und deren Erstreckung in axialer Richtung kann der Laufflächenabschnitt in axialer Richtung in einfacher Weise auf den Initialmontageabschnitt, der bereits am Fahrzeugrad befestigt ist, aufgesetzt werden. Hierdurch ist zum einen die korrekte Ausrichtung als auch die korrekte Montagestellung des Laufflächenabschnitts quasi vorgegeben.

Vorzugsweise umfasst der Initialmontageabschnitt mehrere sich nach radial außen erstreckende Streben, die jeweils wenigstens einen Führungsvorsprung aufweisen. Hierdurch ist es möglich, dass die Führungsvorsprünge an besonders geeigneten Positionen zur Befestigung des Laufflächenabschnitts angeordnet sind. Denkbar ist auch, dass die Streben statt Führungsvorsprüngen Führungsöffnungen aufweisen zur Aufnahme von Führungsvorsprüngen an dem Laufflächenabschnitt.

Vorzugsweise ist der Laufflächenabschnitt über eine Befestigungseinrichtung am Initialmontageabschnitt , insbesondere lösbar, befestigbar, vorzugsweise wobei die Befestigungseinrichtung derart ausgebildet ist, dass sich der Laufflächenabschnitt beim Befestigen an dem Initialmontageabschnitt in einer axialen Richtung zur Felge hin bewegt, vorzugsweise wobei die Befestigungseinrichtung eine Schraubverbindung umfasst, bei deren Anziehen der Laufflächenabschnitt sich in der axialen Richtung zum Initialmontageabschnitt hin bewegt, vorzugsweise wobei die Befestigungseinrichtung elektrisch und/oder pneumatisch angetrieben und/oder durch eine Vorspannung, insbesondere eine Federvorspannung, die Bewegung des Laufflächenabschnitts in axialer Richtung wenigstens unterstützt. Hierdurch kann der Laufflächenabschnitt in einer genau definierten Art und Weise am Initialmontageabschnitt angebracht werden. Insbesondere bei den oben genannten unterstützten Bewegungen des Laufflächenabschnitts ist die Montage besonders einfach.

Wie bereits oben erwähnt, ist es optional, wenn der Laufflächenabschnitt lösbar von dem Initialmontageabschnitt ausgebildet ist. Der Initialmontageabschnitt kann dann an der Felge des Fahrzeugrads befestigt werden und anschließend kann der Laufflächenabschnitt an dem Initialmontageabschnitt befestigt werden. Bevorzugt ist dabei, wenn der Laufflächenabschnitt einen Verbindungsabschnitt, der sich vorzugsweise über den Bereich des Lochkreises erstreckt, wenn der Laufflächenabschnitt am Initialmontageabschnitt befestigt ist, aufweist, der ausgebildet ist, um in axialer Richtung gesehen mit dem Initialmontageabschnitt zu überlappen, sodass der Laufflächenabschnitt in einfacher Weise mit dem Initialmontageabschnitt beispielsweise durch Verschrauben verbunden werden kann.

Vorzugsweise ist die Befestigungseinrichtung derart ausgebildet ist, dass sich der Laufflächenabschnitt beim Befestigen an dem Initialmontageabschnitt in einer axialen Richtung zur Felge hin bewegt. Beispielsweise kann die Befestigungseinrichtung in Form einer stegartigen Strebe und Schrauben ausgebildet sein, wobei die Strebe am Laufflächenabschnitt vorgesehen ist, und beispielsweise Öffnungen zur Aufnahme von Schrauben aufweist, die in den Initialmontageabschnitt eingeschraubt werden können. Der Laufflächenabschnitt kann also an den Initialmontageabschnitt angeschraubt werden, wobei beim Anziehen der Schrauben der Laufflächenabschnitt sich zur Felge hin bewegt.

Es kann an dem Aufsatz ein Antrieb vorgesehen sein, der als Elektromotor ausgebildet sein kann. Der Antrieb kann eine Energiequelle umfassen, die als Akku ausgeführt sein kann. Der Antrieb kann in den Initialmontageabschnitt unlösbar integriert sein oder abnehmbar ausgeführt sein. Der Antrieb kann neben oder statt der Energiequelle auch einen Anschluss an eine externe Stromquelle bspw. einen Zigarettenanzünder des Fahrzeugs umfassen.

Der Antrieb dient zur Betätigung der Befestigungseinrichtung. Bei Betätigung der Befestigungseinrichtung bewegt sich der Laufflächenabschnitt beim Befestigen an dem Initialmontageabschnitt in der axialen Richtung zur Felge hin.

Bspw. kann ein Getriebemotor vorgesehen sein, der steckbar bzw. in anderer Art und Weise für mehrere Schrauben bzw. Befestigungseinrichtung verwendbar ist, oder es kann für jede Schraube bzw. Befestigungseinrichtung jeweils ein integrierter Getriebemotor vorhanden sein.

Vorzugsweise weist der Aufsatz zwei Antriebe auf, die je eine Befestigungseinrichtung betätigen können, mittels der je ein umfängliches Segment des Laufflächenabschnitts in der axialen Richtung zum Initialmontageabschnitt hin bewegbar ist. Der Antrieb weist vorzugsweise eine Werkzeugansatzstelle auf, über die er bei mangelnder Energieversorgung manuell betätigt werden kann, bspw. mit einem Schraubenschlüssel.

Die Befestigungseinrichtung kann auch einen Drehmomentbegrenzer umfassen. Generell ist es vorteilhaft, wenn die Befestigungseinrichtung als Schraubverbindung mit definiertem Anzugsmoment der Verschraubung ausgebildet ist.

Ein integrierter Antrieb in der Befestigungseinrichtung kann über eine starke Selbsthemmung des Antriebs auch eine zusätzliche Sicherheit gegen Lösen der Schraubverbindung bereitstellen.

Eine Spannungsversorgung kann bspw. über das Fahrzeug (z.B. den Zigarettenanzünder) oder auch über eine geeignete fremde Stromquelle (bspw. ein externer Akku) bereitgestellt werden.

Vorzugsweise umfasst der Laufflächenabschnitt mehrere, vorzugsweise in radialer Richtung erstreckte, durch Zwischenräume beabstandete speichenartige Streben, vorzugsweise wobei die Zwischenräume wenigstens bezogen auf einen Radius um die Drehachse des Fahrzeugrads eine umfängliche Erstreckung aufweisen, die größer, vorzugsweise wenigstens dreimal so groß ist, wie die umfängliche Erstreckung der Streben. Hierdurch wird der erfindungsgemäße Aufsatz besonders leicht und kann materialsparend hergestellt werden.

Vorzugsweise ist der Initialmontageabschnitt ausgebildet, um über einen formschlüssigen Hintergriff einer Greifeinrichtung und/oder um über einen kraftschlüssigen Eingriff der Greifeinrichtung mit einer, vorzugsweise kreisrunden, Öffnung in der Felge, die im Bereich des Lochkreises angeordnet ist, am Fahrzeugrad befestigt zu werden, wobei die Öffnung zu Löchern, die zur Aufnahme von Radschrauben bzw. Stehbolzen in der Felge vorgesehen sind, beabstandet in der Felge angeordnet ist, vorzugsweise wobei die Öffnung eine Mittenöffnung der Felge ist oder zu einer Drehachse der Felge beabstandet ist, vorzugsweise wobei jedenfalls ein Teil der Greifeinrichtung unlösbar mit dem Initialmontageabschnitt verbunden ist. Hierdurch kann der Initialmontageabschnitt besonders einfach am Fahrzeugrad befestigt werden. Insbesondere ist es vorteilhaft, wenn die Öffnung im Bereich des Lochkreises eine sogenannte Polykontrollbohrung ist. Der Initialmontageabschnitt des entsprechend ausgebildeten Aufsatzes kann quasi in diese Öffnungen eingesteckt werden und anschließend kann der Laufflächenabschnitt an dem Initialmontageabschnitt angebracht werden.

Der Initialmontageabschnitt kann eine Greifeinrichtung umfassen, die zum kraftschlüssigen Eingriff in die, vorzugsweise kreisrunde, Öffnung in der Felge, die im Bereich des Lochkreises angeordnet ist, und vorzugsweise eine Polykontrollbohrung ist, ausgebildet sein. Bspw. kann die Greifeinrichtung ein in seinem Durchmesser erweiterbares stiftartiges Element umfassen. Das stiftartige Element kann insbesondere derart ausgebildet sein, dass es im vollständig eingeschoben Zustand innerhalb der Polykontrollbohrung endet, sich also nicht vollständig durch diese hindurch erstreckt.

Vorzugsweise umfasst die Greifeinrichtung einen erweiterbaren Abschnitt, vorzugsweise der ausgebildet ist, um die Öffnung im Bereich des Lochkreises zu hintergreifen und/oder die Greifeinrichtung umfasst einen komprimierbaren Abschnitt, der ausgebildet ist, um im komprimierten Zustand durch die Öffnung im Bereich des Lochkreises geführt zu werden und sich in einen unkomprimierten Zustand zu erweitern, wenn er durch die Öffnung geführt ist. Ein erweiterbarer Abschnitt kann dabei beispielsweise eine Hülse sein, die durch Einführen eines Spreizelements aufgespreizt werden kann. Eine derartige Greifeinrichtung kann beispielsweise am Initialmontageabschnitt angeordnet sein. Die Greifeinrichtung in Form der spreizbaren Hülse kann dann beim Anbringen des Initialmontageabschnitts beispielsweise in die Polykotrollbohrung eingeführt werden und anschließend kann ein Spreizelement in die aufspreizbare Hülse eingeführt werden, um diese aufzuspreizen, so dass sie die Polykontrollbohrung hintergreift. Es ist auch denkbar, dass die Greifeinrichtung, wie oben genannt, einen komprimierbaren Abschnitt umfasst. Dieser wird beim Einführen in die Polykontrollbohrung komprimiert und erweitert sich dann selbstständig, wenn er durch die Polykontrollbohrung hindurchgeführt ist und hintergreift diese dann. Die eben beschriebenen Varianten ermöglichen ein einfaches Aufstecken des Initialmontageabschnitts zur Befestigung. Es wird die Montage des Aufsatzes vereinfacht.

Mit "im Bereich des Lochkreises angeordnet" ist dabei jedenfalls auch gemeint, dass sich die Öffnung von den Zwischenräumen zwischen den Speichen der Felge unterscheidet. Eine derartige Öffnung kann insbesondere eine sogenannte Polykontrollbohrung sein.

Die Greifeinrichtung kann beispielsweise, insbesondere wenn sie zum Eingriff in die Mittenöffnung der Felge ausgebildet ist, in Form einer geschlitzten Hülse ausgebildet sein. Im Innern der geschlitzten Hülse kann ein Element mit variierender radialer Erstreckung, insbesondere ein Konuselement, angeordnet sein, das gegenüber der geschlitzten Hülse in axialer Richtung bewegbar ist. Durch die axiale Bewegung des Elements kann die geschlitzte Hülse aufgespreizt werden, sodass sie in die Öffnung bzw. die Mittenöffnung kraftschlüssig eingreift. Das Element kann beispielsweise über eine Schraube in axialer Richtung gegenüber der gespreizten Hülse bewegbar sein. Mit der geschlitzten Hülse kann hierbei auch eine Mehrzahl an spreizbaren Armen gemeint sein.

Optional ist die Greifeinrichtung als Teil des Initialmontageabschnitts ausgebildet. Mit anderen Worten, sie kann unlösbar mit dem Initialmontageabschnitt verbunden sein.

Die Greifeinrichtung kann als ein, insbesondere stabartiger, Fortsatz ausgebildet sein, der einen Hakbereich umfassen kann, wobei der Fortsatz ausgebildet ist, um in die Öffnung eingeführt zu werden. Der Hakbereich kann beispielsweise ausfahrbar oder aufspreizbar ausgebildet sein, sodass er, wenn er durch die Öffnung durchgeführt ist, die Felge formschlüssig hintergreifen kann.

Der Hakbereich kann auch komprimierbar ausgebildet sein. Der Hakbereich kann dann beim Durchführen durch die Öffnung in seinem Durchmesser reduziert sein, und sich selbstständig aufweiten, wenn er durch die Öffnungen durchgeführt ist, sodass er die Felgen quasi automatisch hintergreifen kann. Hierzu kann der Hakbereich beispielsweise reversibel kompressibel, federnd und/oder federnd gelagert ausgebildet sein.

In einer Ausführungsform umfasst die Greifeinrichtung einen erweiterbaren Abschnitt auf, der ausgebildet ist, um die Öffnung im Bereich des Lochkreises zu hintergreifen. Ein derartiger erweiterbarer Abschnitt kann beispielsweise durch einen Hakbereich, der aufspreizbar ausgebildet ist, gebildet sein. Beispielsweise kann die Greifeinrichtung zwei Hakarme umfassen, die sich bspw. durch Einschrauben eines Spreizelements, bspw. einer Schraube, voneinander weg bewegen und damit aufspreizen lassen.

Die Greifeinrichtung kann insbesondere auch hohlstiftartig ausgebildet sein, wobei sie im Inneren ein Spreizelement, insbesondere einen aufweitenden Stift, umfassen kann, der durch Bewegung in axialer Richtung den erweiterbaren Abschnitt aufweitet. An dem Initialmontageabschnitt sind vorzugsweise mehrere Greifeinrichtungen angeordnet. Sind die Greifeinrichtungen bspw. wie eben beschrieben hohlstiftartig ausgebildet, so können die gegebenenfalls vorhandenen aufweitenden Stifte bzw. Spreizelemente miteinander verbunden sein, vorzugsweise und beispielsweise durch eine, bspw. als Schraube ausgebildete, Betätigungseinheit, in axialer Richtung gemeinsam bewegbar sein, um die erweiterbaren Abschnitte aufzuweiten.

Der Initialmontageabschnitt kann insbesondere derart ausgebildet sein, dass er in ihrem Durchmesser komprimierbare Einsteckelemente umfasst, die in die oben genannte Öffnung, insbesondere Polykontrollbohrung, der Felge einführbar sind, wobei sie beim Einführen in ihrem Durchmesser reduzierbar sind. Die Einsteckelemente können ausgebildet sein, um die Öffnung zu hintergreifen oder kraftschlüssig in diese einzugreifen. Vorzugsweise weist der Initialmontageabschnitt ein Spreizelement auf, das die Einsteckelemente entweder aufspreizt und/oder daran hindert, sich in ihrem Durchmesser zu komprimieren, wenn es in die Einsteckelemente eingeführt ist. Die letzte Variante ist insbesondere dann sinnvoll, wenn die Einsteckelemente ausgebildet sind, um sich beim Einstecken in die Polykontrollbohrung im Durchmesser zu reduzieren und im vollständig eingesteckten Zustand aufzuweiten, und die Polykontrollbohrung bzw. Öffnung zu hintergreifen.

Vorzugsweise sind die Spreizelemente derart am Initialmontageabschnitt angebracht, dass der Initialmontageabschnitt in einem Stück an das Fahrzeugrad angebracht und die Einsteckelemente in die Öffnungen, insbesondere Polykontrollbohrungen, der Felge eingeführt werden können, wobei die Spreizelemente noch nicht bzw. noch nicht vollständig in die Einsteckelemente eingeführt sind. Vorzugsweise sind die Spreizelemente in dieser nicht vollständig eingeführten Stellung im Initialmontageabschnitt verriegelt. Nach dem Lösen der Verriegelung ist es vorzugsweise möglich, durch weiteren Druck auf den Initialmontageabschnitt, einen Teil des Initialmontageabschnitts vorzugsweise in axialer Richtung zu bewegen und hierdurch die entriegelten Spreizelemente vollständig in die Einsteckelemente einzuführen, um die Einsteckelemente durch formschlüssigen Hintergriff oder kraftschlüssigen Eingriff in den Öffnungen fest zu fixieren.

Der Initialmontageabschnitt kann insbesondere derart ausgebildet sein, dass er in ihrem Durchmesser komprimierbare Einsteckelemente als Greifeinrichtungen umfasst, die in die oben genannte Öffnung(en), insbesondere Polykontrollbohrung, der Felge einführbar sind, wobei sie beim Einführen in ihrem Durchmesser reduzierbar sind. Die Einsteckelemente können ausgebildet sein, um die Öffnung zu hintergreifen oder kraftschlüssig in diese einzugreifen. Vorzugsweise weist der Initialmontageabschnitt ein Spreizelement auf, das die Einsteckelemente entweder aufspreizt und/oder daran hindert, sich in ihrem Durchmesser zu komprimieren, wenn es in die Einsteckelemente eingeführt ist. Die letzte Variante ist insbesondere dann sinnvoll, wenn die Einsteckelemente ausgebildet sind, um sich beim Einstecken in die Polykontrollbohrung im Durchmesser zu reduzieren und im vollständig eingesteckten Zustand aufzuweiten, und die Polykontrollbohrung bzw. Öffnung zu hintergreifen. Vorzugsweise sind die Spreizelemente derart am Initialmontageabschnitt angebracht, dass der Initialmontageabschnitt in einem Stück an das Fahrzeugrad angebracht und die Einsteckelemente in die Öffnungen, insbesondere Polykontrollbohrungen, der Felge eingeführt werden können, wobei die Spreizelemente noch nicht bzw. noch nicht vollständig in die Einsteckelemente eingeführt sind. Vorzugsweise sind die Spreizelemente in dieser nicht vollständig eingeführten Stellung im Initialmontageabschnitt, bspw. über eine Verriegelungseinrichtung verriegelt. Nach dem Lösen der Verriegelung durch die Verriegelungseinrichtung ist es vorzugsweise möglich, insbesondere durch weiteren Druck auf den Initialmontageabschnitt, einen Teil des Initialmontageabschnitts vorzugsweise in axialer Richtung zu bewegen und hierdurch die entriegelten Spreizelemente vollständig in die Einsteckelemente einzuführen, um die Einsteckelemente durch formschlüssigen Hintergriff oder kraftschlüssigen Eingriff in den Öffnungen fest zu fixieren.

Vorzugsweise weist der Initialmontageabschnitt ein erstes Axialteil und ein zweites Axialteil auf. Vorzugsweise sind die Einsteckelemente am ersten Axialteil angeordnet und die Spreizelemente am zweiten Axialteil. Die beiden Axialteile sind anfänglich zueinander beabstandet und in dieser beabstandeten Position über die Verriegelungseinrichtung verriegelt. Der Initialmontageabschnitt mit den beiden Axialteilen kann dann am Fahrzeugrad angebracht werden, wobei die Einsteckelemente in die Öffnungen eingeführt werden. Anschließend wird die Verriegelungseinrichtung entriegelt und durch ein weiteres Andrücken des Initialmontageabschnitts wird das zweite Axialteil auf das erste Axialteil zu bewegt und die Spreizelemente fahren in die Einsteckelemente ein, um die Einsteckelemente durch formschlüssigen Hintergriff oder kraftschlüssigen Eingriff in den Öffnungen fest zu fixieren. Das Einfahren der Spreizelemente kann aber auch auf andere Art und Weise realisierbar sein. Vorzugsweise ist das erste Axialteil in axialer Richtung zwischen dem Fahrzeugrad und dem zweiten Axialteil angeordnet.

Vorzugsweise ist der Initialmontageabschnitt derart ausgebildet, dass der Initialmontageabschnitt mit Einsteckelementen und Spreizelementen an das Fahrzeugrad anbringbar ist, wobei die Einsteckelementen in die Öffnungen eingeführt werden und in einem zweiten Schritt die Spreizelemente über einen entsprechenden Betätigungsmechanismus betätigt und in die Einsteckelemente eingefahren werden können, um die Einsteckelemente durch formschlüssigen Hintergriff oder kraftschlüssigen Eingriff in den Öffnungen fest zu fixieren.

Der Initialmontageabschnitt kann alternativ oder zusätzlich zu den eben beschriebenen Einsteckelementen und Spreizelementen über Spannmittel, die ausgebildet sind, um das Felgenhorn zu hintergreifen, an der Felge befestigbar sein. Die Spannmittel sind in diesem Fall vorzugsweise durch Hakenelemente gebildet, die leicht schwenkbar an Schieberelementen angeordnet sind. Die Hakenelemente können jedoch auch starr an den Schieberelementen angeordnet sein. Die Schieberelemente weisen vorzugsweise zapfenartige Vorsprünge auf, an denen die Hakenelemente schwenkbar gelagert angebracht sind. Die Schiebeelemente selbst, können in radialer Richtung translatorisch verschiebbar an einer kreuzartigen Struktur des Initialmontageabschnitts angebracht sein. Die kreuzartige Struktur kann mehrere sich nach radial außen erstreckende Streben aufweisen, vorzugsweise drei derartige Streben. Über bspw. als Schrauben ausgebildete Fixiermittel können die Schiebeelemente bzw. wenigstens eines der Schiebeelemente gegenüber der kreuzartigen Struktur bzw. den Streben in ihrer Position fixierbar sein. Ist der Initialmontageabschnitt am Fahrzeugrad befestigt, so kann auf unterschiedliche Art und Weise der Laufflächenabschnitt bzw. die umfänglichen Segmente und an dem Initialmontageabschnitt befestigt werden. Hier sind verschiedene Befestigungsarten denkbar, beispielsweise über die vorangehend beschriebene Befestigungseinrichtung.

Die Bewegung der Schiebeelemente kann vorzugsweise mit einem Winkeltrieb oder mittels eines Spannhebels oder durch eine andere Zugeinrichtung realisiert sein.

Durch eine Arretierung der Schiebeelemente in unterschiedlichen Positionen, kann der Initialmontageabschnitt an verschiedene Felgendurchmesser angepasst werden.

Bei einem Initialmontageabschnitt wie eben beschrieben, ist es denkbar dass der Laufflächenabschnitt keine eigenen Spannmittel aufweist, er kann jedoch auch zusätzliche eigene Spannmittel aufweisen. Bei einer derartigen Variante kann zunächst der Initialmontageabschnitt mit bspw. unten liegenden Spannmitteln hinter dem Felgenhorn eingehakt werden. Die unten liegenden Spannmittel sind dabei bereits gegenüber den Streben in ihrer Position arretiert. Anschließend wird bspw. eine nach oben gerichtete Strebe des Initialmontageabschnitts ebenso an die Felge angelegt, so dass das obere Spannmittel mit dem entsprechenden Schieberelement an dem es befestigt ist, in einfacher Weise über die Zugeinrichtung auf das Felgenhorn zubewegt werden kann, sodass es dieses hintergreifen kann. Anschließend wird das Schiebeelement bzw. das Spannmittel mittels des Fixiermittels gegenüber der entsprechenden Strebe arretiert.

Anschließend wird zunächst das erste umfängliche Segment des Laufflächenabschnitts am Initialmontageabschnitt befestigt. Das Fahrzeugrad wird dann derart rotiert, dass das erste umfängliche Segment des Laufflächenabschnitts die Fahrbahn kontaktiert. Und in einem letzten Schritt wird das zweite umfängliche Segment des Laufflächenabschnitts an den Initialmontageabschnitt angebracht.

Bei einem Initialmontageabschnitt, wie eben beschrieben ist auch möglich, zunächst den Initialmontageabschnitt am Fahrzeugrad zu befestigen. In einem nächsten Schritt kann dann mit dem beschädigten Fahrzeugrad auf eine kleine keilartige Rampe aufgefahren werden, so dass das Fahrzeugrad mit dem platten Reifen von der Fahrbahn abgehoben ist. Der Initialmontageabschnitt kann auch am Fahrzeugrad befestigt werden, wenn das Fahrzeug bereits auf der Rampe steht. Dann kann in sehr einfacher Weise auch ein in umfänglicher Richtung einstückig ausgebildeter Laufflächenabschnitt auf den am Fahrzeugrad bzw. an der Felge verspannten Initialmontageabschnitt aufgesetzt werden.

Optional kann der Laufflächenabschnitt einen in Umfangsrichtung durchgängig ausgebildeten Innenabschnitt umfassen, der radial innen liegend von einem Außenabschnitt angeordnet ist, wobei der Außenabschnitt in Umfangsrichtung mit einer Unterbrechung ausgebildet ist, und wobei der Außenabschnitt weiterhin einen Einsatzabschnitt umfasst, der, wenn der Aufsatz im am Fahrzeugrad montierten Zustand ist, in der Unterbrechung derart aufgenommen ist, dass der Außenabschnitt eine geschlossene kreisförmige Lauffläche aufweist. Da der Außenabschnitt die Unterbrechung in umfänglicher Richtung aufweist, ist es möglich den Initialmontageabschnitt und den Laufflächenabschnitt ohne Einsatzabschnitt am Fahrzeugrad anzubringen ohne das Fahrzeugrad vom Fahrzeug zu entfernen oder das Fahrzeug mit einem Wagenheber anzuheben. Hierzu kann der Initialmontageabschnitt beispielsweise in einer der oben beschriebenen Weisen am Fahrzeugrad befestigt werden. Anschließend wird die Unterbrechung im Außenabschnitt des Laufflächenabschnitts zum Boden hin ausgerichtet und der Laufflächenabschnitt an dem Initialmontageabschnitt befestigt. Wenn der Initialmontageabschnitt und der Laufflächenabschnitt am Fahrzeugrad angebracht sind, kann das Fahrzeug geringfügig bewegt werden. Die Unterbrechung bewegt sich dann, durch die Drehung des Fahrzeugrades, von der Ausrichtung zum Boden hin weg. Beispielsweise kann das Fahrzeug um eine halbe Drehung des Fahrzeugrads nach vorn bewegt werden, die Unterbrechung ist dann nicht mehr zur Fahrbahn hin ausgerichtet, sondern zeigt nach oben. Nun kann der Einsatzabschnitt in die Unterbrechung eingesetzt bzw. aufgenommen werden. Der Aufsatz weist dann eine in umfänglicher Richtung geschlossene kreisförmige Lauffläche auf. Die Montage des Aufsatzes kann dann abgeschlossen sein oder der Aufsatz kann noch über zusätzliche Mittel (bspw. Spannmittel) weiter am Fahrzeugrad befestigt werden.

Vorzugsweise umfasst der Laufflächenabschnitt ein ringförmiges Teilstück, das vorzugsweise im äußeren radialen Bereich angeordnet ist. Das ringförmige Teilstück kann in umfänglicher Richtung mehrstückig ausgebildet sein. Vorzugsweise ist es entsprechend den gegebenenfalls vorhandenen umfänglichen Segmenten des Laufflächenabschnitts in umfänglicher Richtung mehrstückig ausgebildet. Vorzugsweise ist das ringförmige Teilstück an einem Hauptteil des Laufflächenabschnitts in axialer Richtung derart anbringbar, dass ein Laufflächenbelag, der die Lauffläche des Aufsatzes bildet, kraft- und/oder formschlüssig zwischen dem Hauptteil und dem ringförmigen Teilstück des Laufflächenabschnitts gehalten ist. Das ringförmige Teilstück kann hierzu beispielsweise an dem Hauptteil über eine Schraubverbindung angebracht sein.

Vorzugsweise ist der Laufflächenabschnitt mit einem vergossenen Laufbelag, vorzugsweise aus einem gießbaren Polymer ausgeführt. Der Laufbelag ist also vorzugsweise an den Laufflächenabschnitt angegossen.

Der Laufbelag kann auch am Laufflächenabschnitt klemmend befestigt sein. Vorzugsweise ist die Klemmung derart, dass im normalen Fahrbetrieb keine Relativbewegungen zwischen Laufbelag und dem Rest des Laufflächenabschnitts stattfindet. Die Klemmung kann jedoch vorzugsweise derart eingestellt sein, dass bei extremen Beschleunigungen oder Extrembremsungen eine Relativbewegung zwischen Laufbelag und dem Rest des Laufflächenabschnitts stattfindet.

Optional ist, wenn der Aufsatz eine Reifenverdrängeinrichtung umfasst, die ausgebildet ist, um den Reifen beim Anbringen des Aufsatzes, und/oder beim Befestigen des Laufflächenabschnitts an dem Initialmontageabschnitt und/oder beim Betätigen des Spannmittels in axialer Richtung vom Felgenhorn weg zu drängen. Hierdurch haben die Spannmittel freien Zugriff auf das Felgenhorn.

Optional ist, wenn die Reifenverdrängeinrichtung gesondert von dem Spannmittel ausgebildet ist. Denkbar ist auch, dass die Reifenverdrängeinrichtung durch das Spannmittel bzw. einen Abschnitt des Spannmittels ausgebildet ist bzw. diesen umfasst.

Optional ist, wenn der Verriegelungsmechanismus derart ausgebildet ist, dass das Sicherungselement, wenn es in die Sicherungsposition bewegt wird, den Hintergriffabschnitt des Spannmittels, der sich im Hintergriff mit dem Abschnitt der Felge befindet, zusätzlich gegen den Abschnitt der Felge spannt.

Bevorzugt ist, wenn das Sicherungselement eine bewegbare Spannfläche aufweist, die ausgebildet und angeordnet ist, um einen, vorzugsweise vorsprungartig, insbesondere zapfenartig, ausgebildeten Abschnitt des Spannmittels zu hintergreifen und derart mit einer Kraft zu beaufschlagen, dass der Hintergriffabschnitt des Spannmittels in die Hintergriffstellung mit dem Abschnitt der Felge des Fahrzeugrads gedrängt wird bzw. in diesem Hintergriff verspannt wird, wenn der Verriegelungsmechanismus in die Sicherungsposition überführt wird.

Nicht Teil der Erdingung ist ein Aufsatz, der einen Grundkörper mit einer Lauffläche aufweist, wobei der Grundkörper einer der Ausführungsformen der oben beschriebenen Laufflächenabschnitte entsprechen kann, vorzugsweise und wobei der Aufsatz zusätzlich eine oder mehrere Ausführungsformen der bisher beschriebenen Spannmittel, vorzugsweise und eine oder mehrere Ausführungsformen des Verriegelungsmechanismus umfasst. Ein derartiger Aufsatz muss also nicht zwingend den Initialmontageabschnitt der bisher beschriebenen Ausführungsformen umfassen.

Denkbar, aber nicht Teil der vorliegenden Erfindung ist ein System aus einem Aufsatz und einer Felge eines Fahrzeugrads, wobei der Aufsatz die oben und nachfolgend beschriebenen Merkmale aufweisen kann bzw. nach einer oder mehreren der oben und nachfolgend beschriebenen Ausführungsformen ausgebildet sein kann und die Felge wenigstens eine Öffnung, vorzugsweise mehrere Öffnungen, aufweist, die im Bereich des Lochkreises in der Felge angeordnet ist bzw. sind, und wobei die Öffnung zu den Löchern, die zur Aufnahme von Radschrauben bzw. Stehbolzen vorgesehen sind, vorzugsweise und zu der Mittenöffnungen der Felge, beabstandet angeordnet ist bzw. sind. Die beschriebenen Öffnungen können Polykontrollbohrungen sein, können aber auch andere speziell für die Befestigung des Aufsatzes vorgesehene Öffnungen sein.

Vorzugsweise sind die Mittelpunkte der Öffnungen beabstandet, vorzugsweise nach radial außen beabstandet, zu einem Kreis angeordnet, der durch Mittelpunkte der Löchern, die zur Aufnahme von Radschrauben bzw. Stehbolzen vorgesehen sind, verläuft und/oder dass die Mittelpunkte der Öffnungen beabstandet, vorzugsweise nach radial innen beabstandet, zu einem Kreis angeordnet sind, der den kleinsten Kreis bildet, der sämtliche Löcher, die zur Aufnahme von Radschrauben bzw. Stehbolzen vorgesehen sind, umschreibt.

Offenbart ist auch ein Set aus einem Aufsatz gemäß einer oder mehreren der oben genannten Ausführungsformen und einer Auffahrelement. Das Auffahrelement ist vorzugweise rampenartig, insbesondere mit einem Plateauabschnitt, ausgebildet, so dass der Fahrzeugführer mit dem platten Reifen und dieses Auffahrelement auffahren kann und anschließend auf den Plateauabschnitt gelangt, auf dem er das Fahrzeug sicher abstellen kann. Er kann dann in einfacher Art und Weise den Aufsatz des Sets am Fahrzeugrad anbringen.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert .
Figur 1 ein Fahrzeugrad beim Blick in einer axialen Richtung;
Figur 2 eine Schnittdarstellung der Felge des Fahrzeugrads aus Figur 1;
Figur 3 eine erste Ausführungsform eines erfindungsgemäßen Aufsatzes;
Figur 4 die Ausführungsform von Figur 3 in weiteren Darstellungen;
Figur 5 eine weitere Ausführungsform eines erfindungsgemäßen Aufsatzes;
Figur 6 eine weitere Ausführungsform eines erfindungsgemäßen Aufsatzes;
Figur 7 eine weitere Ausführungsform eines erfindungsgemäßen Aufsatzes;
Figur 8 Der Initialmontageabschnitt des Aufsatzes aus Figur 3;
Figur 9 Ein alternativer Initialmontageabschnitt eines erfindungsgemäßen Aufsatzes;
Figur 10 Einen Bereich um eine Kontaktfläche zwischen zwei umfänglichen Segmenten eines Laufflächenabschnitts;
Figur 11 eine weitere Ausführungsform eines erfindungsgemäßen Aufsatzes;
Figur 12 Verschiedene Schnittdarstellungen des Aufsatzes aus Figur 11;
Figur 13 Eine Greifeinrichtung;
Figur 14 Eine weitere Greifeinrichtung;
Figur 15 ein als Fertigteil ausgebildetes Spannmittel;
Figur 16 das Spannmittel aus Figur 15 in der Stellung, in der es das das Felgenhorn hintergreift, wobei das Felgenhorn nicht gezeigt ist; und
Figur 17 ein Aufsatz mit einem Antrieb zu Bewegung des Laufflächenabschnitts zum Initialmontageabschnitt hin;

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

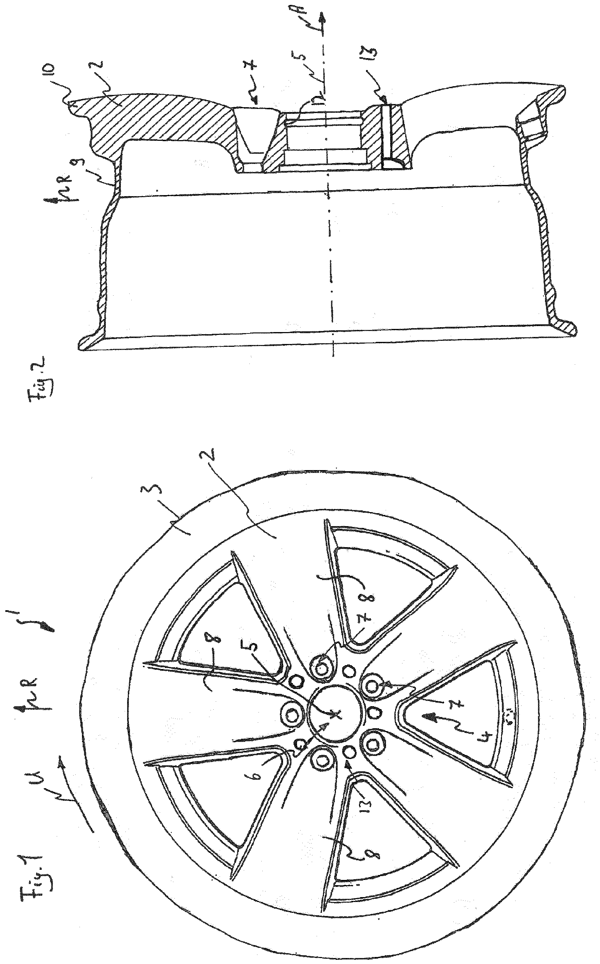

Figur 1 zeigt in schematischer Darstellung ein Fahrzeugrad 1. Das Fahrzeugrad 1 umfasst eine Felge 2 und einen auf der Felge 2 angebrachten Reifen 3. Die Felge 2 ist in Figur 2 einzeln ohne den Reifen 3 gezeigt.

Eine Umfangsrichtung U ist durch einen Pfeil mit dem Bezugszeichen U dargestellt. Eine axiale Richtung A ist durch einen Pfeil mit dem Bezugszeichen A dargestellt (Figur 2). Eine radiale Richtung R ist durch einen Pfeil mit dem Bezugszeichen R dargestellt.

Radial innenliegend umfasst die Felge 2 einen Lochkreis 4 des Fahrzeugrads 1. Im Zentrum des Lochkreises 4 ist um eine entlang der axialen Richtung A verlaufende Drehachse 5 des Fahrzeugrads 1 eine sogenannte Mittenöffnung 6, die teilweise auch als Nabenbohrung oder Mittellochzentrierung bezeichnet wird, angeordnet.

Der Lochkreis 4 umfasst vorliegend fünf Schraubenlöcher 7, von denen zwei mit einem Bezugszeichen versehen sind. Bei dem vorliegenden Fahrzeugrad 1 erstrecken sich fünf Speichen 8 vom Bereich des Lochkreises 4 nach radial außen.

Die Felge 2 umfasst ein Felgenbett 9 und ein Felgenhorn 10 und die Mittenöffnung 6 weist eine vertiefte umlaufende Nut 12 auf.

Die Felge 2 weist mehrere Öffnungen 13 auf, die im Bereich des Lochkreises 4 angeordnet sind. Die Öffnungen 13 sind zu den Schraubenlöchern 7, also Löchern 7, die zur Aufnahme von Radschrauben bzw. Stehbolzen vorgesehen sind, und zu der Mittenöffnungen 6 der Felge 2, beabstandet in der Felge 2 angeordnet.

Die Öffnungen 13 können, bspw. als Polykontrollbohrungen ausgeführt sein, über die ein Achsspiel der Achse des Fahrzeugrads 1 gemessen werden kann.

Hat der Reifen 3 des Fahrzeugrads 1 ein Loch, so entweicht die im Reifen befindliche Luft und die Reifenfunktion des Fahrzeugrades 1 ist eingeschränkt. Um in einem solchen Fall den Fahrbetrieb weiterhin zu ermöglichen, kann ein erfindungsgemäßer Aufsatz 14 verwendet werden.

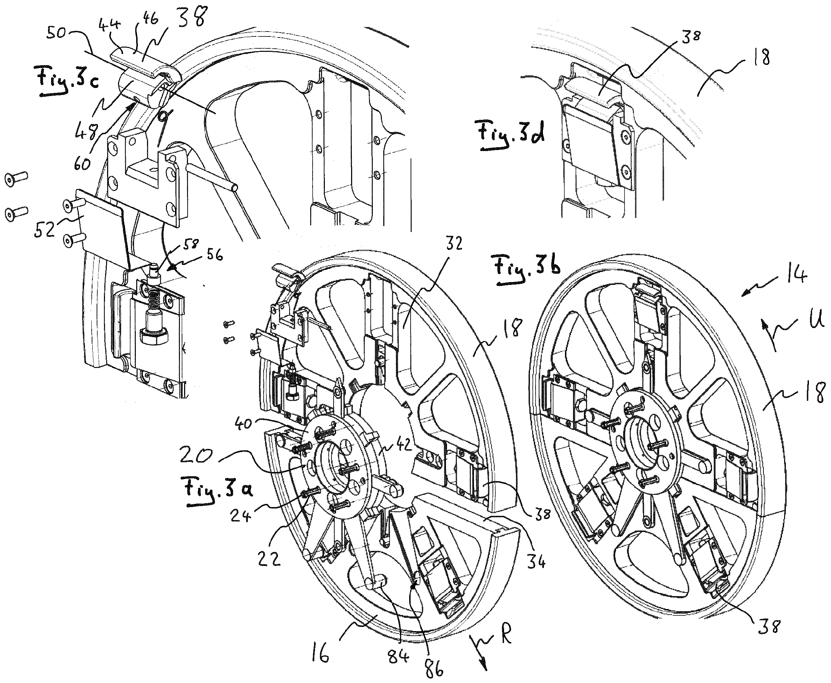

Ein Beispiel eines derartigen Aufsatzes ist in Figur 3 gezeigt. Der Aufsatz 14 ist mit einem Laufflächenabschnitt 16, der eine Lauffläche 18 des Aufsatzes 14 umfasst, und mit einem Initialmontageabschnitt 20, der bei der Montage des Aufsatzes 14 radial innenliegend von der Lauffläche 18 angeordnet ist, ausgebildet.

Der Laufflächenabschnitt 16 ist vorliegend separat und von dem Initialmontageabschnitt 20 lösbar ausgebildet.

Der Initialmontageabschnitt 20 ist ausgebildet, um an dem Fahrzeugrad 1 im Bereich eines Lochkreises 4 einer Felge 2 des Fahrzeugrads 1 befestigt zu werden, insbesondere um über einen formschlüssigen Hintergriff und/oder eine kraftschlüssige Verbindung im Bereich des Lochkreises 4 der Felge 2 befestigt zu werden.

Der formschlüssige Hintergriff wird im vorliegenden Beispiel mittels einer bzw. mehrerer Greifeinrichtungen 22 realisiert. Die Greifeinrichtung 22 umfasst im vorliegenden Beispiel einen erweiterbaren Abschnitt 24. Die Greifeinrichtung 22 ist im vorliegenden Beispiel bolzenartig bzw. in Form einer aufspreizbaren Hülse 26 ausgebildet. Die als aufspreizbare Hülsen ausgebildeten Greifeinrichtungen 22 sind ausgebildet und angeordnet, um in die Öffnungen 13 an der Felge 2 des Fahrzeugrads 1 eingeführt zu werden.

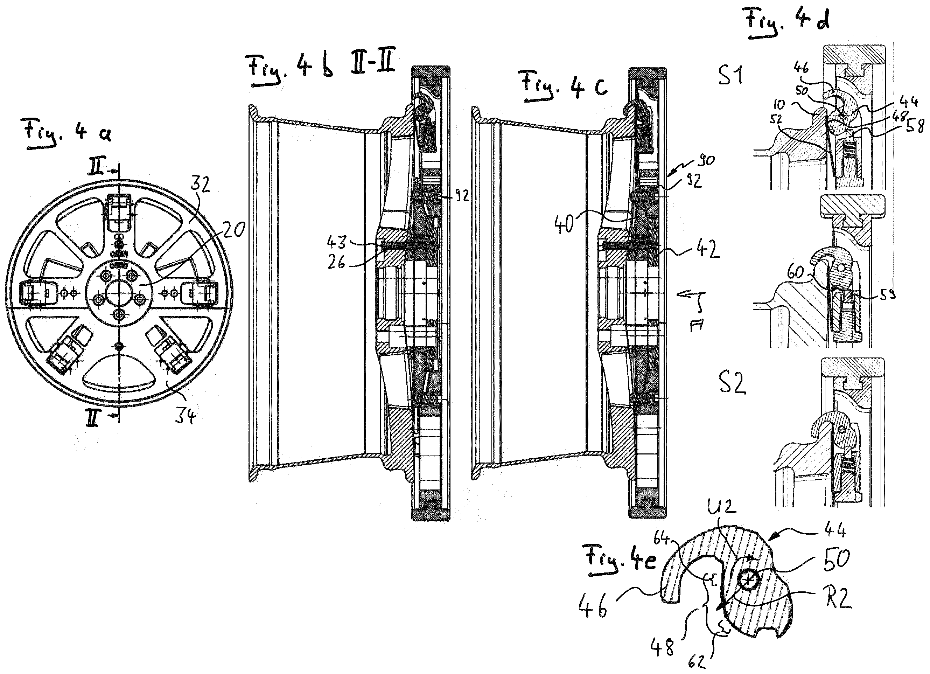

Der Laufflächenabschnitt 16 ist vorliegend in der Umfangsrichtung U mehrteilig ausgebildet, vorzugsweise wobei der Laufflächenabschnitt 16, wie vorliegend, ein erstes umfängliches Segment 32 und ein zweites umfängliches Segment 34 umfasst. Der Aufsatz 14 umfasst des Weiteren Spannmittel 38, die ausgebildet sind, um einen Abschnitt, vorzugsweise das Felgenhorn 10, der Felge 2 zu hintergreifen (Figuren 4b - 4d). Im vorliegenden Beispiel sind die Spannmittel 38 an dem Laufflächenabschnitt 16 angeordnet.

Der Initialmontageabschnitt 20 weist einen ersten axialen Teil 40 und einen zweiten axialen Teil 42 auf. Die Greifeinrichtungen 40 sind vorzugsweise, wie vorliegend, fest am ersten axialen Teil 40 befestigt, während am zweiten axialen Teil 42 stiftartige Fortsätze 43 angebracht sind, die in die aufspreizbaren Hülsen 26 eingefahren werden, wenn die beiden axialen Teile des Initialmontageabschnitts 20 ineinander bzw. aufeinander aufgeschoben werden.

Zur Befestigung des Aufsatzes 14 am Fahrzeugrad 1 wird zunächst der erste axiale Teil 40 mit den aufspreizbaren Hülsen 26 in die Öffnungen 13 eingesetzt. Im nächsten Schritt wird der zweite axiale Teil 42 derart auf den ersten axialen Teil 40 aufgesetzt, dass die stiftartigen Fortsätze 43 in die aufspreizbaren Hülsen 26, die sich bereits in den Öffnungen 13 befinden, eingeführt. Hierdurch werden die aufspreizbaren Hülsen 26 aufgespreizt und hintergreifen die Öffnungen 13 formschlüssig. Der Initialmontageabschnitt 20 ist durch einen formschlüssigen Hintergriff am Fahrzeugrad befestigt, Da die Greifeinrichtungen 22 die Polykontrollbohrungen des Fahrzeugrades hintergreifen.

Als nächstes wird das erste umfängliche Segment 32 an den Initialmontageabschnitt 20 angesetzt. Die Spannmittel 38 sind vorliegend jeweils durch ein schwenkbar gelagertes Hakenelement 44 gebildet, welches in eine erste Stellung, in der es das Felgenhorn 10 nicht hintergreift, vorgespannt ist, wie dies in Figur 4b gezeigt ist.

Das Hakenelement 44 weist einen Hintergriffabschnitt 46 auf, der ausgebildet ist, um den Hintergriff mit dem Felgenhorn 10 zu realisieren. Die Hakenelemente 44 umfassen des Weiteren einen Betätigungsabschnitt 48, der starr mit dem Hintergriffabschnitt 46 verbunden ist. Der Hintergriffabschnitt 46 ist bezüglich der Schwenkachse 50 radial außenliegend angeordnet. Der Betätigungsabschnitt 48 ist bezüglich der Schwenkachse 50 radial innenliegend angeordnet.

Der Aufsatz 14 umfasst als Bleche ausgebildete Kontaktelemente 52, die verschwenkbar am Laufflächenabschnitt 16 angeordnet sind. Die Verschwenkbarkeit der als Bleche ausgebildeten Kontaktelemente 52 ist vorliegend durch ihre elastische Verformbarkeit gegeben. Die Kontaktelemente 52 können auf ihrer in axialer Richtung A dem Fahrzeugrad 1 zugewandten Seite auch eine Gummierung zum Schutz der Felge 2 aufweisen.

Die Kontaktelemente 52 sind ausgebildet und angeordnet, um beim Montieren des Aufsatzes 14 am Fahrzeugrad 1 die Felge 2 des Fahrzeugrads 1 zu kontaktieren. Sie sind ebenso ausgebildet, um beim Kontaktieren der Felge 2 den Betätigungsabschnitt 48 der Hakenelemente 44 zu kontaktieren.

Die Kontaktelemente 52 weisen also jeweils einen Kontaktabschnitt 54 auf, der derart ausgebildet und angeordnet ist, dass er beim Anbringen des Laufflächenabschnitts 16 am Fahrzeugrad das Fahrzeugrad 1, insbesondere die Felge 2 des Fahrzeugrads 1, kontaktiert und durch diesen Kontakt betätigt wird bzw. eine Kraft in axialer Richtung auf den Kontaktabschnitt ausgeübt wird. Durch die Betätigung des Kontaktabschnitts wird wiederum der Betätigungsabschnitt am Hakenelement betätigt und das Hakenelement 44 um die Schwenkachse 50 verschwenkt, so dass der Hintergriffabschnitt 46 das Felgenhorn 10 der Felge 2 hintergreift.

Der Aufsatz 14 umfasst des Weiteren einen Verriegelungsmechanismus 56. Der Verriegelungsmechanismus 56 umfasst jeweils ein Rastelement 58. Das Rastelement 58 ist im vorliegenden Beispiel als federvorgespannter Bolzen 59 ausgeführt. Befindet sich das Spannmittel bzw. dessen Hakenelement 44 in der Stellung, in der der Hintergriffabschnitt 46 das Felgenhorn hintergreift, so greift das Rastelement 58 in eine entsprechende Ausnehmung 60 am Hakenelement 44 ein. Das Hintergreifen des Felgenhorns 10 durch das Hakenelement 44 ist nochmals anschaulich in Figur 4d illustriert.

Ein Hakenelement 44, ist in Figur 4e einzelnen und vergrößert dargestellt. Figur 4e zeigt das Hakenelement 44 in der Stellung der untersten Abbildung von Figur 4d. Wird der Betätigungsabschnitt 48 näher erläutert. Der Betätigungsabschnitt 48 ist vorzugsweise derart an dem vorliegenden Hakenelement 44 angeordnet und ausgebildet, dass der Abstand seiner Oberfläche in einer zweiten radialen Richtung R2 von der Schwenkachse 50 aus gesehen in einer zweiten umfänglichen Richtung U2 um die Schwenkachse 50 herum kontinuierlich abnimmt.

Der Betätigungsabschnitt 48 ist vorzugsweise, wie in der in Figur 4 dargestellten Version, derart ausgebildet und angeordnet, dass in einer ersten Schwenkstellung S1 (Figur 4d oben) des Hakenelements 44, ein zu einem Kontaktpartner gerichteter erster Abschnitt 62 des Betätigungsabschnitts 48 den am weitesten von der Schwenkachse 50 entfernten Teil des Betätigungsabschnitts 48 bildet. In der ersten Schwingstellung S1 des Hakenelements 44 hintergreift das Hakenelement 44 mit dem Hintergriffabschnitt 46 das Felgenhorn 10 nicht.

Der Kontaktpartner ist im Beispiel von Figur 4 das Kontaktelement 52, also das federnd ausgebildete Blech. Der Kontaktpartner kann aber auch beispielsweise der Felge oder anders ausgestaltetes Kontaktelement 52 sein.

In der zweiten Schwenkstellung S2 (Figur 4d unten) des Hakenelements 44 hintergreift das Hakenelement 44 das Felgenhorn 10 mit dem Hintergriffabschnitt 46. Ein in dieser Stellung zu dem Kontaktpartner gerichteter zweiter Abschnitt 64 des Betätigungsabschnitts 48 bildet in dieser Stellung den am nächsten zur Schwenkachse 50 gelegenen Teil des Betätigungsabschnitts 48.

Der Betätigungsabschnitts 48 erstreckt sich vom ersten Abschnitt 62 zum zweiten Abschnitt 64 und stellt die Fläche am Hakenelement 44 dar, die beim Verschwenken aufgrund des Kontakts mit dem Kontaktpartner, beispielsweise dem Kontaktelement 52 oder der Felge 2, dem Kontaktpartner zugewandt ist bzw. diesen kontaktiert. Von dem ersten Abschnitt 62 zum zweiten Abschnitt 64 hin, nimmt der Abstand der Oberfläche des Betätigungsabschnitts zur Schwenkachse 50 kontinuierlich ab. Durch die kontinuierliche Abnahme dieses Abstands, kann eine Bewegung des Kontaktelements 52 in axialer Richtung A in eine Schwenkbewegung des Hakenelements 44 umgewandelt werden.

Im Beispiel von Figur 4 ist der Hintergriffabschnitt 46 radial auswärts von der Schwenkachse 50 angeordnet, wobei der Betätigungsabschnitt 48 radial einwärts von der Schwenkachse 50 angeordnet ist.

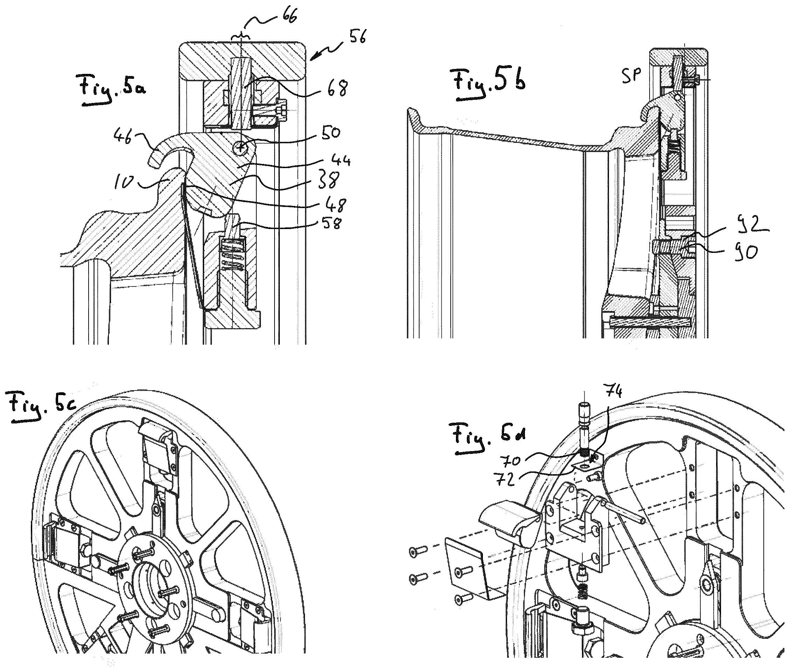

Figur 5 zeigt eine Variante, bei der der Betätigungsabschnitt 48 und der Hintergriffabschnitt 46 beide radial einwärts von der Schwenkachse 50 angeordnet sind. Dabei bezieht sich diese Betrachtungsweise auf die zweite Schwenkstellung S2, in der der Hintergriffabschnitt 46 im Hintergriff mit dem Felgenhorn 10 steht.

Der Aufsatz 14 von Figur 5 umfasst auch den Verriegelungsmechanismus 56. Der Verriegelungsmechanismus 56 umfasst ein Rastelement 58 wie es bereits im Zusammenhang mit Figur 4 erläutert wurde.

Der Verriegelungsmechanismus 56 von Figur 5 ist außerdem ausgebildet, um mit einem Sicherungsabschnitt 66 bei am Fahrzeugrad 1 angebrachtem Aufsatz 14 und sich drehendem Fahrzeugrad 1 die Fahrbahn zu kontaktieren und dadurch den Sicherungsabschnitt 66 zu betätigen, insbesondere mit einer radial einwärts gerichteten Kraft zu beaufschlagen. Der Sicherungsabschnitt 66 ist vorliegend in der Lauffläche 18 angeordnet.

Der Verriegelungsmechanismus 56 ist derart ausgebildet, dass ein Sicherungselement 68 bei Betätigung des Sicherungsabschnitts 66 in eine Sicherungsposition SP bewegt wird, die in Figur 5b gezeigt ist. In der Sicherungsposition SP ist es formschlüssig gehalten, was vorliegend in Figur 5 durch eine geriffelte Oberfläche 70, die durch ein Blech 72 mit einem entsprechend ausgeführten Öffnung 74 geführt wird, realisiert ist. Die geriffelte Oberfläche 70 ist dabei mit einer derart asymmetrisch ausgebildeten Regelung ausgeführt, dass sie in radial einwärts gerichteter Richtung durch die Öffnung 74 hindurch gedrückt werden kann, jedoch nicht in radial auswärts gerichteter Richtung. Vorzugsweise ist das Sicherungselement 68 aus der Sicherungsposition SP nur mittels eines Werkzeugs lösbar. In der Sicherungsposition SP verriegelt das Sicherungselement 68 das Spannmittel 38 formschlüssig in der Hintergriffstellung mit dem Felgenhorn 10.

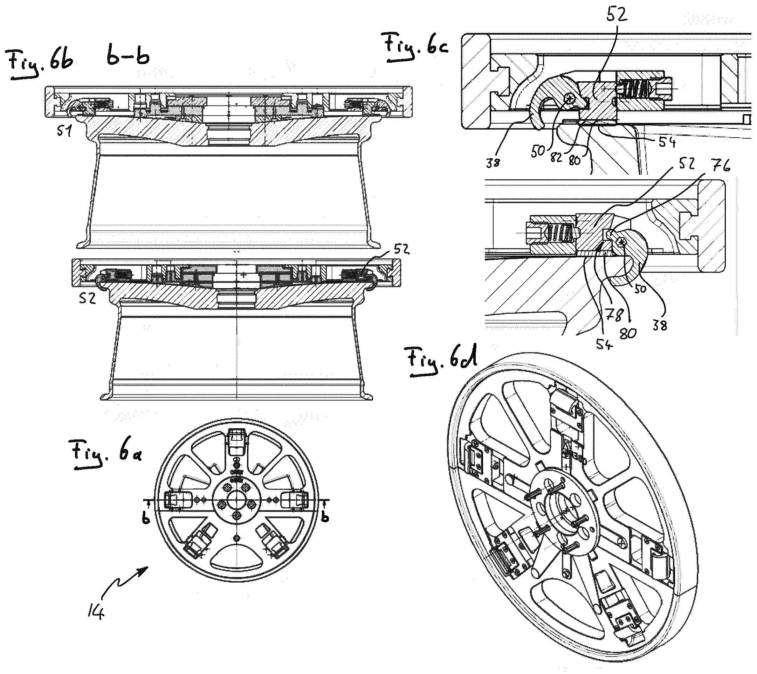

In Figur 6 ist eine weitere Ausführungsform des erfindungsgemäßen Aufsatzes 14 dargestellt. Die Ausführungsform von Figur 6 umfasst ein schieberartig ausgebildetes Kontaktelement 52.

Das Kontaktelement 52 ist separat von dem Spannmittel 38 ausgebildet und in axialer Richtung A verschiebbar bzw. verschwenkbar an dem Aufsatz 14, insbesondere am Laufflächenabschnitt 16 angeordnet.

Das Hakenelement 44 umfasst in dieser Ausführungsform einen Betätigungsabschnitt 48 in Form eines Fortsatzes 76. Der Fortsatzes 76 greift in eine Ausnehmung 78 am Kontaktelement 52 ein. Hierdurch kann eine in axialer Richtung A gerichtete translatorische Bewegung des Kontaktelements 52 in eine Schwenkbewegung des Hakenelements 44 um die Schwenkachse 50 herum gewandelt werden.

Der Aufsatz 14 von Figur 6 umfasst auch den Verriegelungsmechanismus 56. Der Verriegelungsmechanismus 56 umfasst wiederum ein Rastelement 58 wie es bereits im Zusammenhang mit Figur 4 erläutert wurde mit dem Unterschied, dass das Rastelement 58 nur indirekt mit dem Spannmittel 38 zusammenwirkt bzw. dieses verriegelt. Die Verriegelung erfolgt, indem das Rastelement 58 das Kontaktelement 52 blockiert verriegelt, welches wiederum den Fortsatz 76 des Spannmittels 38 verriegelt.

Das Kontaktelement 52 weist einen Kontaktschutz 80 auf, welcher vorliegend als Gummierung 82 ausgeführt ist. Ein derartiger Kontaktschutz kann auch direkt am Spannmittel 38 vorgesehen sein, beispielsweise dann, wenn das Spannmittel 38 selbst den Kontaktabschnitt 54 umfasst.

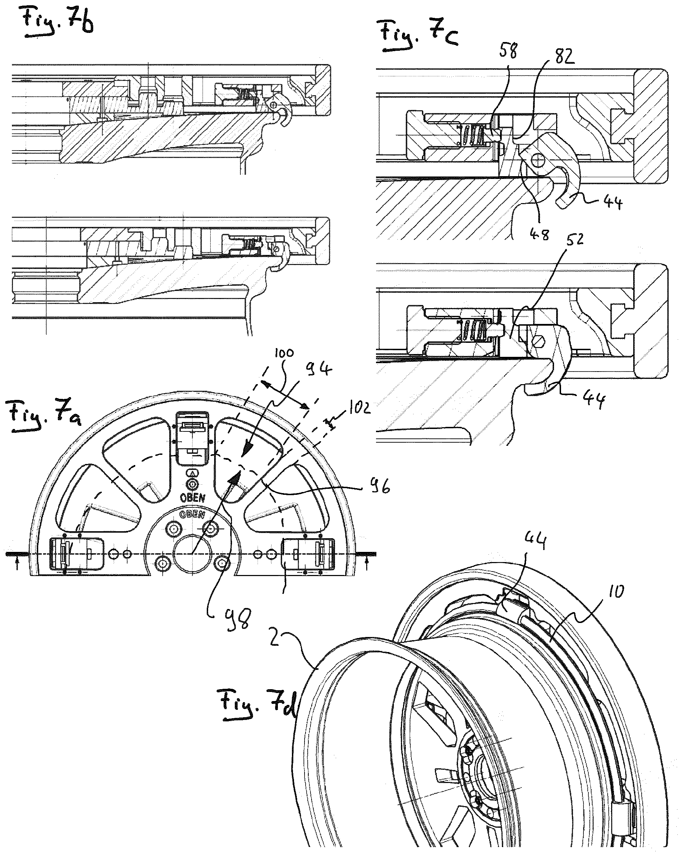

In Figur 7 ist eine weitere Ausführungsform des erfindungsgemäßen Aufsatzes 14 dargestellt. Bei dieser Ausführungsform weist das Kontaktelement 52 eine abgestufte Kopplungsfläche 82 auf, die mit dem Betätigungsabschnitt 48 des Hakenelements 44. Hierdurch kann die in axialer Richtung A gerichtete translatorische Bewegung des Kontaktelements 52 in eine Schwenkbewegung des Hakenelements 44 um die Schwenkachse 50 herum gewandelt werden. Das Rastelement 58 verriegelt das Spannmittel 38 im Beispiel von Figur 7 wiederum nur indirekt, wie bereits im Beispiel von Figur 6.

Figur 7d zeigt anschaulich den Aufsatz 14 im am Fahrzeugrad 1 bzw. an der Felge 2 befestigten Zustand.

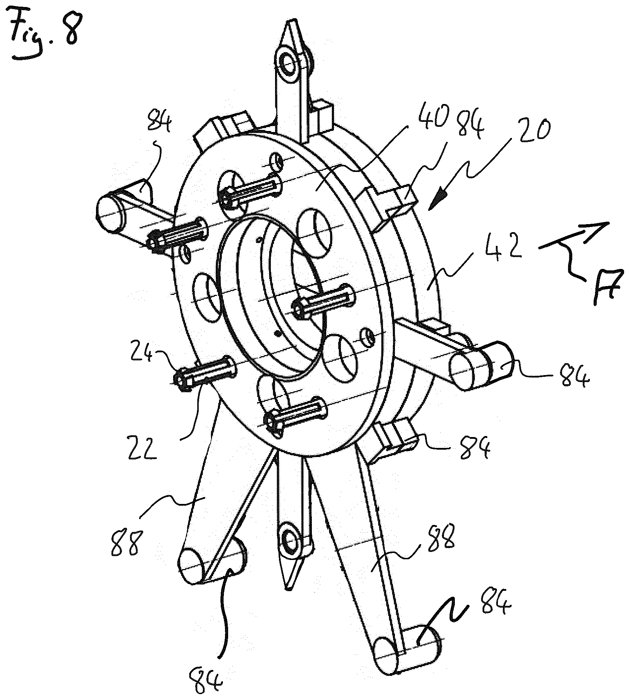

In Figur 8 ist der Initialmontageabschnitt 20 aus Figur 1 im Detail dargestellt. Der Initialmontageabschnitt 20 weist mehrere in axialer Richtung erstreckte, vorzugsweise zapfenartige, Führungsvorsprünge 84 auf.

Der Laufflächenabschnitt 16 weist entsprechend zu den Führungsvorsprüngen 84 je eine Führungsöffnung 86 auf. Die jeweilige Führungsöffnung 86 ist komplementär zu dem Führungsvorsprung 84 ausgebildet, so dass wenn der Initialmontageabschnitt 20 bereits am Fahrzeugrad 1 angebracht ist, der Laufflächenabschnitt 16 bzw. ein Teil bzw. Segment 32, 34 des Laufflächenabschnitts 16 derart auf den Initialmontageabschnitt 20 aufgesetzt werden kann, dass der jeweilige Führungsvorsprung 84 in die Führungsöffnung 86 eingreift und eine axiale Montagebewegung des Laufflächenabschnitts 16 gegenüber dem Initialmontageabschnitt 20 und dem Fahrzeugrad 1 durch den Eingriff des Führungsvorsprungs 84 in die Führungsöffnung 86 geführt ist.

Der Initialmontageabschnitt 20 weist mehrere sich nach radial außen erstreckende Streben 88 auf, die jeweils wenigstens einen Führungsvorsprung 84 aufweisen.

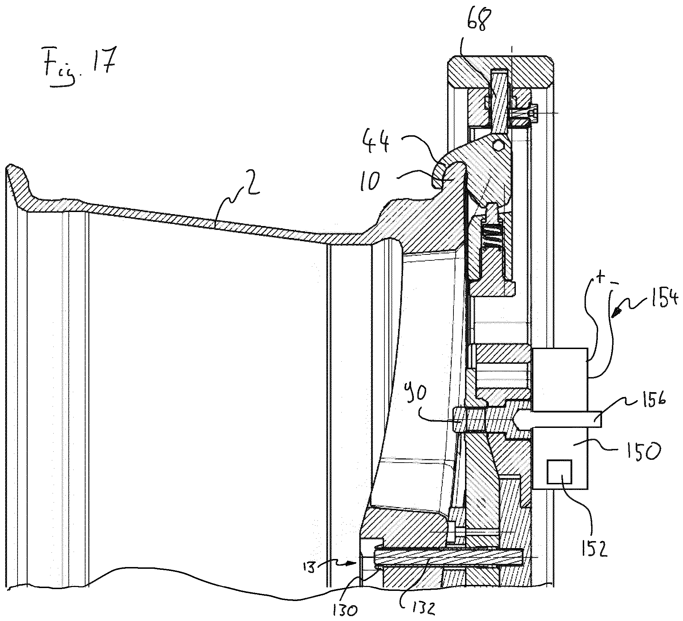

In dem Beispiel der Figur 4 ist anschaulich illustriert, dass der Laufflächenabschnitt 16 über eine Befestigungseinrichtung 90 am Initialmontageabschnitt 20 lösbar befestigt ist. Die Befestigungseinrichtung 90 ist vorzugsweise derart ausgebildet, dass sich der Laufflächenabschnitt 16 beim Befestigen an dem Initialmontageabschnitt 20 in der axialen Richtung A zur Felge 2 hin bewegt. Die Befestigungseinrichtung 90 ist im Beispiel von Figur 4 als eine Schraubverbindung 92 ausgebildet. Beim Anziehen der Schraubverbindung wird der Laufflächenabschnitt 16 in der axialen Richtung A zum Initialmontageabschnitt 20, der bereits über die Greifeinrichtungen 22 am Fahrzeugrad befestigt ist, hin bewegt. Die Befestigungseinrichtung 90 kann auch elektrisch und/oder pneumatisch angetrieben und/oder durch eine Vorspannung, insbesondere eine Federvorspannung, die Bewegung des Laufflächenabschnitts 16 in axialer Richtung A wenigstens unterstützen. Es kann bspw. ein steckbarer bzw. in anderer Art und Weise für mehrere Schrauben bzw. Befestigungseinrichtung 90 verwendbarer oder für jede Schraube bzw. Befestigungseinrichtung 90 jeweils ein integrierter Getriebemotor vorgesehen sein. In Figur 17 ist eine Ausführungsform gezeigt, die einen Antrieb 150, der im vorliegenden Beispiel als Elektromotor ausgebildet ist, umfasst. Der Antrieb 150 umfasst eine Energiequelle 152, die als Akku ausgeführt ist. Der Antrieb 150 kann in den Initialmontageabschnitt 20 unlösbar integriert sein oder abnehmbar ausgeführt sein. Der Antrieb umfasst neben oder statt der Energiequelle 152 auch einen Anschluss 154 an eine externe Stromquelle bspw. einen Zigarettenanzünder des Fahrzeugs.

Der Antrieb 150 dient zur Betätigung der Befestigungseinrichtung 90. Betätigung der Befestigungseinrichtung 90 bewegt sich der Laufflächenabschnitt 16 beim Befestigen an dem Initialmontageabschnitt 20 in der axialen Richtung A zur Felge 2 hin.

Vorzugsweise weist der Aufsatz 14 zwei Antriebe 150 auf, die je eine Befestigungseinrichtung 90 betätigen können, mittels der je ein umfängliches Segment 32, 34 des Laufflächenabschnitts 16 in der axialen Richtung A zum Initialmontageabschnitt 20 hin bewegbar ist. Der Antrieb 150 weist eine Werkzeugansatzstelle 156 auf, über die er bei mangelnder Energieversorgung manuell betätigt werden kann, bspw. mit einem Schraubenschlüssel.

Wie in Figur 7a illustriert kann der Laufflächenabschnitt 16 mehrere, vorzugsweise in radialer Richtung R erstreckte, durch Zwischenräume 94 beabstandete speichenartige Streben 96 umfasst, vorzugsweise wobei die Zwischenräume 94 wenigstens bezogen auf einen Radius 98 eine umfängliche Erstreckung 100 aufweisen, die größer, vorzugsweise wenigstens dreimal so groß ist, wie die umfängliche Erstreckung 102 der Streben 96.

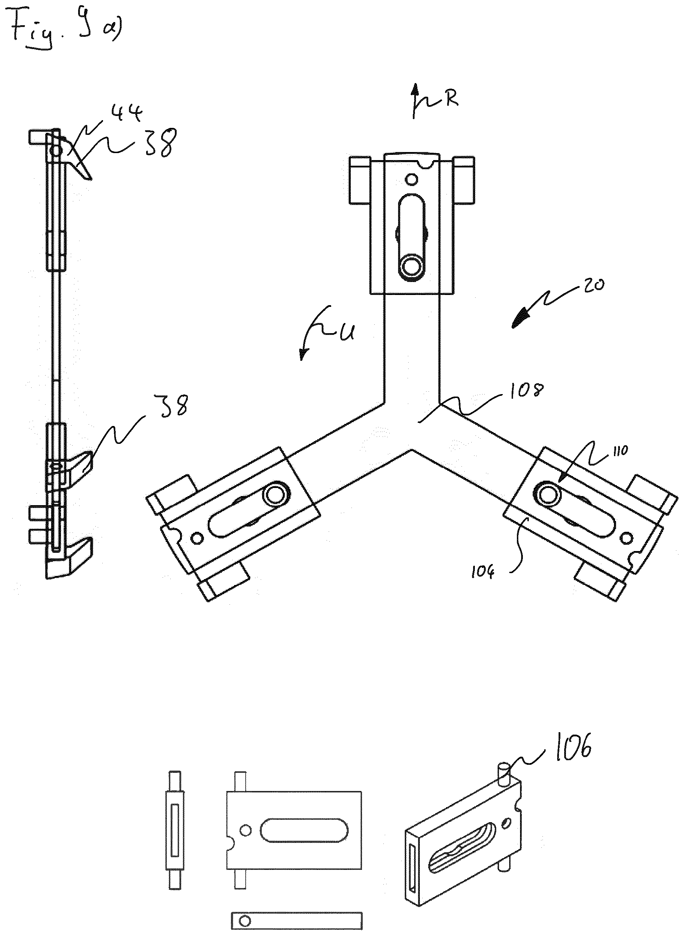

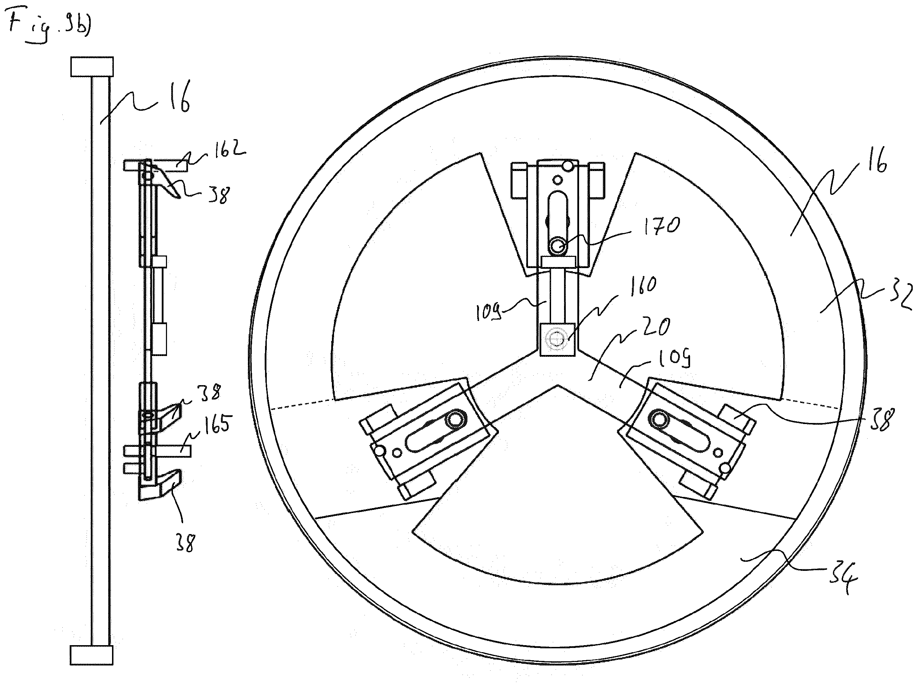

Figur 9a) illustriert eine Variante eines Initialmontageabschnitts 20. Der Initialmontageabschnitt 20 aus Figur 9 ist über Spannmittel 38, die ausgebildet sind, um das Felgenhorn 10 zu hintergreifen, an der Felge 2 befestigbar. Die Spannmittel 38 sind vorliegend durch Hakenelemente 44 gebildet, die leicht schwenkbar an Schieberelementen 104 angeordnet sind. Die Hakenelemente 44 können jedoch auch starr an den Schieberelementen 104 angeordnet sein. Die Schieberelemente 104 weisen zapfenartige Vorsprünge 106 auf, an denen die Hakenelemente 44 schwenkbar gelagert angebracht sind. Die Schiebeelemente 104 selbst, sind in radialer Richtung R translatorisch verschiebbar an einer kreuzartigen Struktur 108 des Initialmontageabschnitts 20 angebracht. Die kreuzartige Struktur 108 weist 3 sich nach radial außen erstreckende Streben 109 auf. Über als Schrauben ausgebildete Fixiermittel 110 können die Schiebeelemente 104 gegenüber der kreuzartigen Struktur 108 bzw. den Streben 109 in ihrer Position fixiert werden. Ist der Initialmontageabschnitt 20 am Fahrzeugrad 1 befestigt, so kann auf unterschiedliche Art und Weise der Laufflächenabschnitt 16 bzw. die umfänglichen Segmente 32 und 34 an dem Initialmontageabschnitt 20 befestigt werden. Hier sind verschiedene Befestigungsarten denkbar, beispielsweise über die vorangehend beschriebene Befestigungseinrichtung 90.

Die Bewegung der Schiebeelemente 104 kann vorzugsweise mit einem Winkeltrieb oder mittels eines Spannhebels oder durch eine andere Zugeinrichtung 160 realisiert sein.

Durch eine Arretierung der Schiebeelemente 104 in unterschiedlichen Positionen, kann der Initialmontageabschnitt 20 aus Figur 9 an verschiedene Felgendurchmesser angepasst werden.

In Figur 9b) ist der Initialmontageabschnitt 20 aus Figur 9a) mit einem speziell auf diesen Initialmontageabschnitt 20 abgestimmten Laufflächenabschnitt 16 dargestellt. Der Laufflächenabschnitt 16 weist vorliegend keine eigenen Spannmittel 38 auf, er kann jedoch auch zusätzliche eigene Spannmittel 38 aufweisen. Bei der gezeigten Variante kann zunächst der Initialmontageabschnitt 20 mit den in Figur 9b) unten liegenden Spannmitteln 38 hinter dem Felgenhorn 10 eingehakt werden. Die beiden unten liegenden Spannmittel 38 sind dabei bereits gegenüber den Streben 109 in ihrer Position arretiert. Anschließend wird die in Figur 9B nach oben gerichtete Strebe 109 des Initialmontageabschnitts 20 ebenso an die Felge 2 angelegt, wodurch über eine als starrer Fortsatz ausgebildete Reifenverdrängeinrichtung 165 der Reifen vom Felgenhorn 10 abgehoben wird, so dass das obere Spannmittel 38 mit dem Schieberelement 104, an dem es befestigt ist, in einfacher Weise über die Zugeinrichtung 160 auf das Felgenhorn 10 zubewegt werden kann, sodass es dieses hintergreifen kann. Anschließend wird das Schiebeelement 104 bzw. das Spannmittel 38 mittels der Schraube 170, die ein Fixiermittel 110 darstellt, gegenüber der entsprechenden Strebe 109 arretiert.

Anschließend wird zunächst das erste umfängliche Segment 32 des Laufflächenabschnitts 16 am Initialmontageabschnitt 20 befestigt. Das Fahrzeugrad wird dann derart rotiert, dass das erste umfängliche Segment 32 des Laufflächenabschnitts die Fahrbahn kontaktiert. Und in einem letzten Schritt wird das zweite umfängliche Segment 34 des Laufflächenabschnitts 16 an den Initialmontageabschnitt 20 angebracht.

Bei einem Initialmontageabschnitt 20, wie er in Figur 9 gezeigt ist, ist es auch möglich, zunächst den Initialmontageabschnitt 20 am Fahrzeugrad zu befestigen. In einem nächsten Schritt kann dann mit dem beschädigten Fahrzeugrad 1 auf eine kleine keilartige Rampe aufgefahren werden, so dass das Fahrzeugrad 1 mit dem platten Reifen 3 von der Fahrbahn abgehoben ist. Dann kann in sehr einfacher Weise auch ein in umfänglicher Richtung U einstückig ausgebildeter Laufflächenabschnitt 16 auf den am Fahrzeugrad 1 bzw. an der Felge 2 verspannten Initialmontageabschnitt 20 aufgesetzt werden.

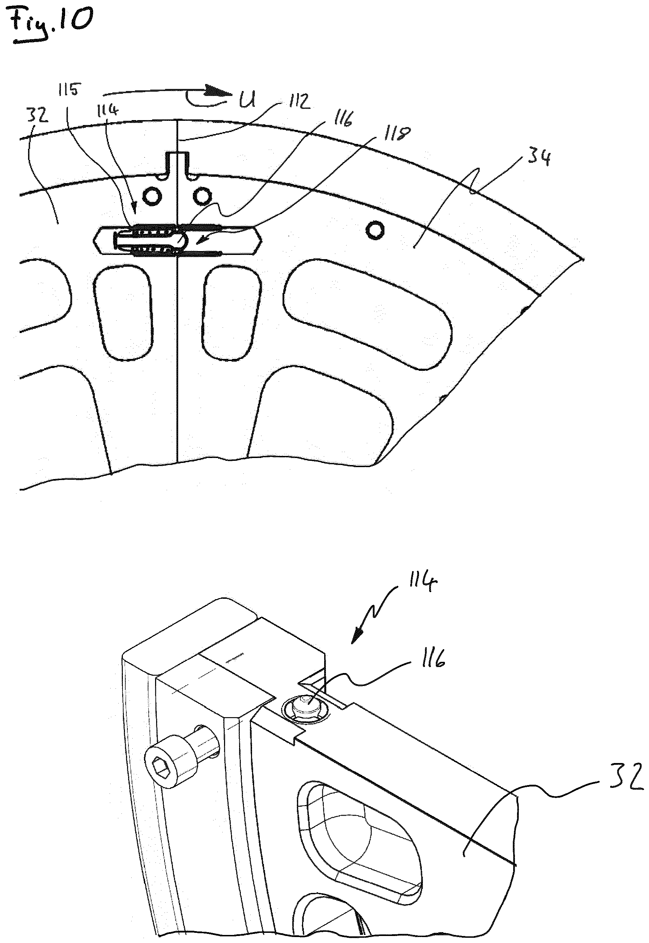

Wenn der Lauffläche Abschnitt 16 mehrere umfängliche Segmente, beispielsweise das erste umfängliche Segment 32 und das zweite umfängliche Segment 34 umfasst, so ist es vorteilhaft, wenn an deren Kontaktflächen 112 zueinander eine Verbindungseinrichtung 114 angeordnet ist. Dies ist in den Figuren 10-12 illustriert. Die Verbindungseinrichtung 114 kann beispielsweise über ein, über eine Feder 115, vorgespanntes Element 116 ausgeführt sein, dass in einem der umfänglichen Segmente angeordnet ist und in umfänglicher Richtung federnd gelagert aus der Kontaktfläche 112 hinaussteht. An dem anderen umfänglichen Segment ist eine entsprechende Ausnehmung 118 angeordnet, in die das federvorgespannte Element 116 eingreifen kann.

Nachdem das erste umfängliche Segment 32 an dem Initialmontageabschnitt 20 befestigt wurde kann das zweite umfängliche Segment 34 in axialer Richtung A aufgeschoben werden. Wenn die beiden Kontaktflächen 112 übereinander gleiten, so wird das federvorgespannte Element 116 in Umfangsrichtung U in das erste umfängliche Segment 32 hinein gedrängt, wobei das federvorgespannte Element 116 in die Ausnehmung 118 am zweiten umfänglichen Segment 34 eingreift, wenn das zweite umfängliche Segment 34 in die vorgesehene Position vollständig in axialer Richtung A aufgeschoben worden ist.

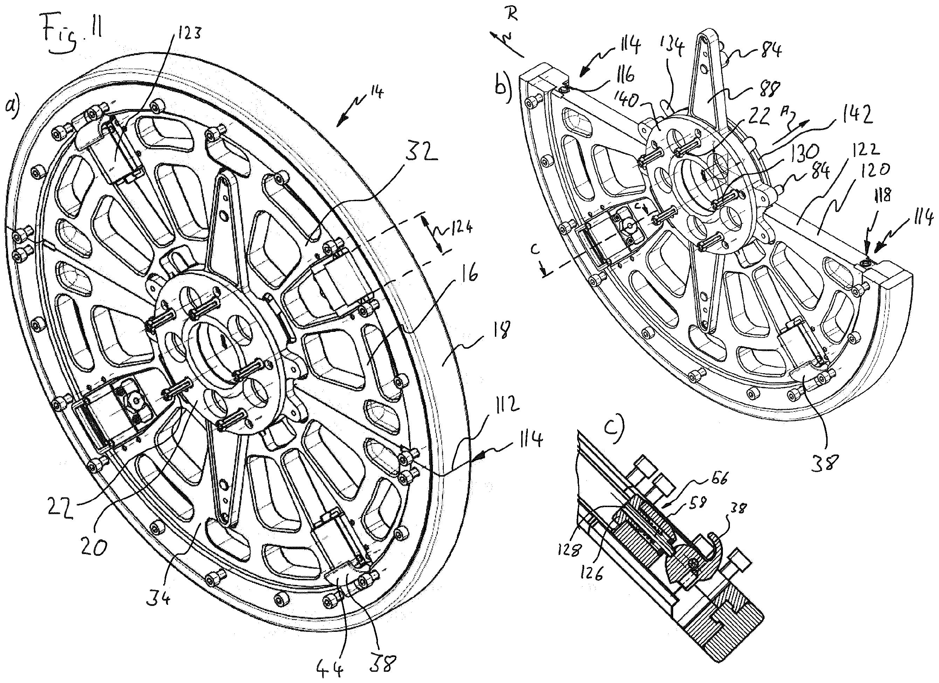

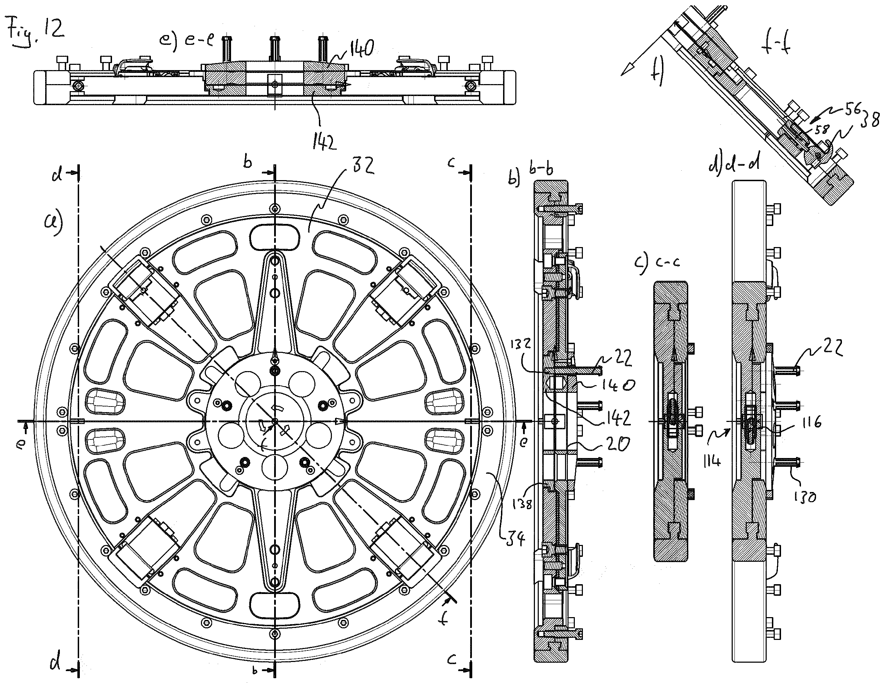

In den Figuren 11 und 12 ist eine vorteilhafte Variante des Aufsatzes 14 gezeigt.

Vorzugsweise weist der Aufsatz 14 einen Laufflächenabschnitt 16 mit genau zwei umfänglichen Segmenten 32, 34 auf, die insbesondere beide eine umfängliche Erstreckung von 180° aufweisen. Vorzugsweise sind die umfänglichen Segmente 32, 34 im Wesentlichen baugleich. Vorzugsweise weisen die beiden umfänglichen Segmente 32, 34 identische Grundelemente 120 auf.

Vorzugsweise sind die Grundelemente 120 als Gussteile 122 ausgebildet. Vorzugsweise sind an jedem dieser beiden umfänglichen Segmenten genau zwei Spannmittel 38, die jeweils als schwenkbare Hakenelemente 44 ausgebildet sind, angeordnet.

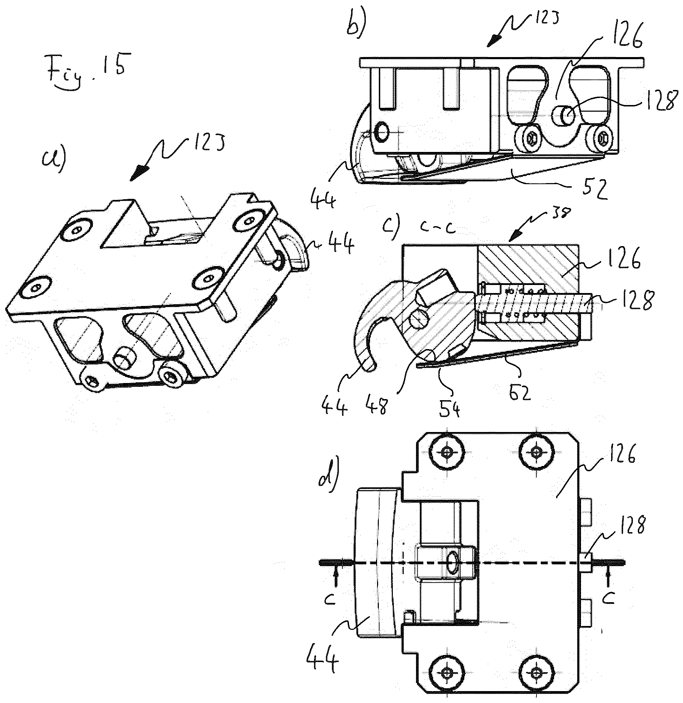

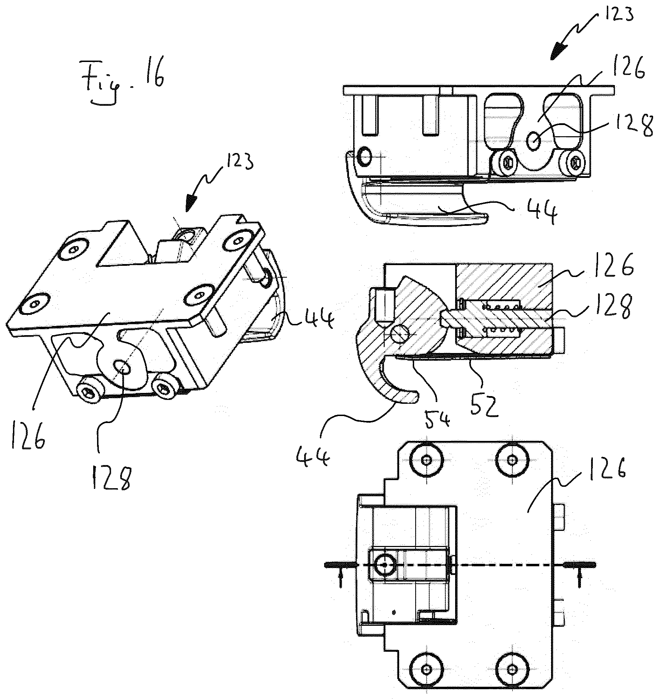

Vorzugsweise sind die Spannmittel 38 als Fertigteil 123 ausgebildet, das an die Grundelemente 120 der umfänglichen Segmente 32, 34 angeschraubt ist. Dies ist anschaulich in den Figuren 15 und 16 gezeigt. Vorzugsweise ist das Kontaktelement 52 an dem Fertigteil 123 angeordnet und mit diesem an dem Grundelement 120 montierbar.

Vorzugsweise weist jedes der Hakenelemente eine Erstreckung 124 in Umfangsrichtung von wenigstens 30mm, vorzugsweise 40mm, insbesondere 50mm auf.

In Figur 11c) ist der Verriegelungsmechanismus 56 im Detail gezeigt. Der Verriegelungsmechanismus 56 umfasst ein Rastelement 58, das derart ausgeführt ist, dass es in dem in Figur 11c) gezeigten Zustand, in dem es das Hakenelement 44 verriegelt, vollständig in der Einschalung 126 eingefahren ist (Figur 16). Bevor das Hakenelement 44 in der Stellung ist, in der es das Felgenhorn 10 hintergreift, verriegelt das Rastelement 58 das Hakenelement 44 noch nicht und steht mit seinem hinteren Abschnitt 128 aus der Einschalung 126 heraus (Figur 15). Vorzugsweise ist der hintere Abschnitt 128 mit einer Signalfarbe, beispielsweise Rot, ausgeführt. Der aus der Einschalung 126 herausragende hintere Abschnitt 128 ist vorzugsweise von der dem Fahrzeugrad 1 abgewandten Seite des Aufsatzes her beim Blick in axialer Richtung A sichtbar. Damit umfasst der Aufsatz 14 eine optische Kontrolle, ob die Spannmittel 38 bzw. Hakenelemente vollständig in Hintergriff mit dem Felgenhorn 10 geschwenkt sind. Dies ist auch anschaulich in Figur 15 gezeigt.

Figur 12 zeigt den Aufsatz aus Figur 11 nochmals in verschiedenen Schnitt Darstellungen.

Der Initialmontageabschnitt 20 kann insbesondere derart ausgebildet sein, dass er in ihrem Durchmesser komprimierbare Einsteckelemente 130 als Greifeinrichtungen 22 umfasst, die in die oben genannte Öffnung 13, insbesondere Polykontrollbohrung, der Felge 2 einführbar sind, wobei sie beim Einführen in ihrem Durchmesser reduzierbar sind. Die Einsteckelemente 130 können ausgebildet sein, um die Öffnung 13 zu hintergreifen oder kraftschlüssig in diese einzugreifen (In Figur 11 und 12 ist eine Version zum formschlüssigen Hintergreifen dargestellt). Vorzugsweise weist der Initialmontageabschnitt 20 ein Spreizelement 132 auf, das die Einsteckelemente entweder aufspreizt und/oder daran hindert, sich in ihrem Durchmesser zu komprimieren, wenn es in die Einsteckelemente eingeführt ist. Die letzte Variante ist insbesondere dann sinnvoll, wenn die Einsteckelemente ausgebildet sind, um sich beim Einstecken in die Polykontrollbohrung im Durchmesser zu reduzieren und im vollständig eingesteckten Zustand aufzuweiten, und die Polykontrollbohrung bzw. Öffnung zu hintergreifen.

Vorzugsweise sind die Spreizelemente 132 derart am Initialmontageabschnitt 20 angebracht, dass der Initialmontageabschnitt 20 in einem Stück an das Fahrzeugrad 1 angebracht und die Einsteckelemente 132 in die Öffnungen 13, insbesondere Polykontrollbohrungen, der Felge 2 eingeführt werden können, wobei die Spreizelemente 132 noch nicht bzw. noch nicht vollständig in die Einsteckelemente 130 eingeführt sind. Vorzugsweise sind die Spreizelemente 132 in dieser nicht vollständig eingeführten Stellung im Initialmontageabschnitt 20, bspw. über eine Verriegelungseinrichtung 134 verriegelt. Nach dem Lösen der Verriegelung durch die Verriegelungseinrichtung 134 ist es vorzugsweise möglich, insbesondere durch weiteren Druck auf den Initialmontageabschnitt 20, einen Teil 138 des Initialmontageabschnitts 20 vorzugsweise in axialer Richtung A zu bewegen und hierdurch die entriegelten Spreizelemente 132 vollständig in die Einsteckelemente 130 einzuführen, um die Einsteckelemente 130 durch formschlüssigen Hintergriff oder kraftschlüssigen Eingriff in den Öffnungen 13 fest zu fixieren.

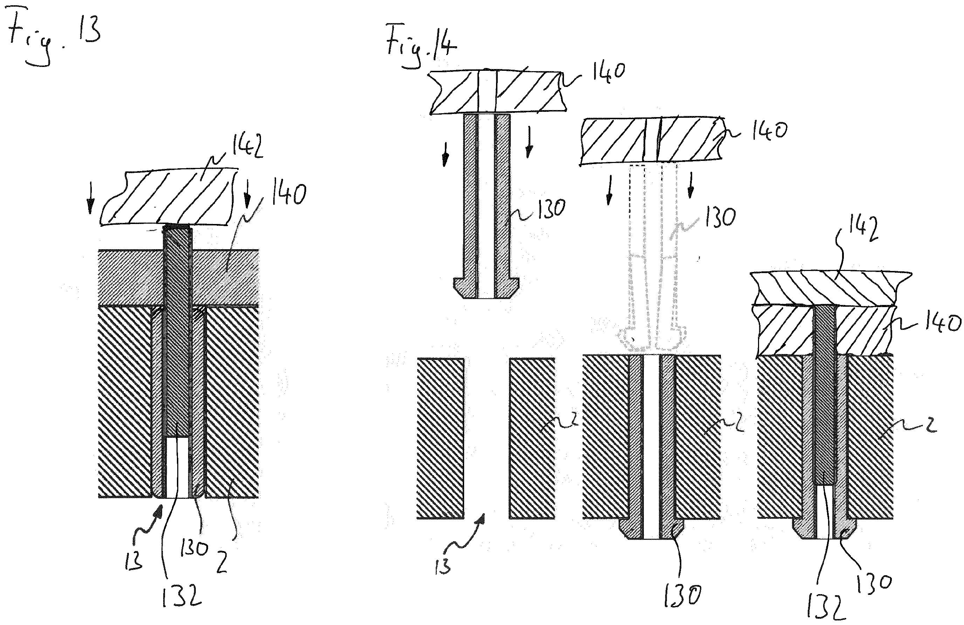

Vorzugsweise weist der Initialmontageabschnitt 20 ein erstes Axialteil 140 und ein zweites Axialteil 142 auf. Vorzugsweise sind die Einsteckelemente 130 am ersten Axialteil 140 angeordnet und die Spreizelemente 132 am zweiten Axialteil 142. Die beiden Axialteile 140, 142 sind anfänglich zueinander beabstandet und in dieser beabstandeten Position über die Verriegelungseinrichtung 134 verriegelt. Der Initialmontageabschnitt 20 mit den beiden Axialteilen 140, 142 kann dann am Fahrzeugrad angebracht werden, wobei die Einsteckelemente 130 in die Öffnungen 13 eingeführt werden. Anschließend wird die Verriegelungseinrichtung 134 entriegelt und durch ein weiteres Andrücken des Initialmontageabschnitts 20 wird das zweite Axialteil 142 auf das erste Axialteil 140 zu bewegt und die Spreizelemente 132 fahren in die Einsteckelemente 130 ein, um die Einsteckelemente 130 durch formschlüssigen Hintergriff (Figur 14) oder kraftschlüssigen Eingriff (Figur 13) in den Öffnungen 13 fest zu fixieren. Das Einfahren der Spreizelemente 132 kann aber auch auf andere Art und Weise realisierbar sein.

Vorzugsweise ist der Initialmontageabschnitt 20 derart ausgebildet, dass der Initialmontageabschnitt 20 mit Einsteckelementen 130 und Spreizelementen 132 an das Fahrzeugrad 1 anbringbar ist, wobei die Einsteckelementen 130 in die Öffnungen 13 eingeführt werden und in einem zweiten Schritt die Spreizelemente 132 über einen entsprechenden Betätigungsmechanismus, der an dem Initialmontageabschnitt 20 angeordnet ist und bspw. als Betätigungshebel ausgebildet sein kann, betätigt und in die Einsteckelemente 130 eingefahren werden können, um die Einsteckelemente 130 durch formschlüssigen Hintergriff oder kraftschlüssigen Eingriff in den Öffnungen 13 fest zu fixieren.

## Patentansprüche

1. Aufsatz (14) für ein eine Felge (2) umfassendes Fahrzeugrad (1) zur Ermöglichung eines Fahrbetriebs bei eingeschränkter Reifenfunktion, wobei der Aufsatz (14) einen Laufflächenabschnitt (16) mit einer Lauffläche (18) aufweist, und wobei der Aufsatz (14) wenigstens ein Spannmittel (38) umfasst, das dazu ausgebildet ist, einen Abschnitt der Felge (2) zu hintergreifen, wobei der Aufsatz (14) ferner einen Initialmontageabschnitt (20) umfasst und wenigstens ein Teil des Laufflächenabschnitts (16) separat von dem Initialmontageabschnitt (20) und mit diesem lösbar verbindbar ausgebildet ist oder mit dem Initialmontageabschnitt (20) beweglich verbunden ausgebildet ist, wobei der Initialmontageabschnitt (20) für eine bezüglich der Lauffläche (18) radial innenliegende Anordnung ausgebildet ist, wenn der Aufsatz (14) am Fahrzeugrad (1) befestigt ist,
**dadurch gekennzeichnet, dass** der Aufsatz (14) einen Kontaktabschnitt (54) umfasst, der dazu ausgebildet ist, das Spannmittel (38) zu betätigen und in Hintergriff mit dem Abschnitt (10, 11) der Felge (2) zu bringen, wenn der Kontaktabschnitt (54) betätigt wird, und wobei der Kontaktabschnitt (54) am Laufflächenabschnitt (16) angeordnet und derart ausgebildet und angeordnet ist, dass er beim Anbringen des Laufflächenabschnitts (16) am Fahrzeugrad (1) das Fahrzeugrad (1) kontaktiert und durch diesen Kontakt betätigt wird, oder wobei der Kontaktabschnitt (54) am Initialmontageabschnitt (20) angeordnet und derart ausgebildet und angeordnet ist, dass er beim Anbringen des Initialmontageabschnitts (20) am Fahrzeugrad (1) das Fahrzeugrad (1) kontaktiert und durch diesen Kontakt betätigt wird.

2. Aufsatz (14) nach dem voranstehenden Anspruch, **dadurch gekennzeichnet, dass** das Spannmittel (38) an dem Laufflächenabschnitt (16) und/oder an dem Initialmontageabschnitt (20) angeordnet ist.

3. Aufsatz (14) nach einem der voranstehenden Ansprüche, **dadurch gekennzeichnet, dass** der Kontaktabschnitt (54) beim Anbringen des Aufsatzes (14) am Fahrzeugrad (1) die Felge (2) des Fahrzeugrads (1) kontaktiert.

4. Aufsatz (14) nach einem der voranstehenden Ansprüche, **dadurch gekennzeichnet, dass** der Laufflächenabschnitt in Umfangsrichtung (U) gesehen wenigstens zwei jeweils einen Teil des Umfangs der Lauffläche (18) umfassende Segmente (32, 34) aufweist, die voneinander lösbar oder gegenüber einander verschwenkbar oder verschiebbar sind.

5. Aufsatz (14) nach einem der voranstehenden Ansprüche, **dadurch gekennzeichnet, dass** der Kontaktabschnitt (54) auf der dem Fahrzeugrad (1) zugewandten Seite des Aufsatzes (14) angeordnet ist, wenn der Aufsatz (14) am Fahrzeugrad (1) befestigt ist.

6. Aufsatz (14) nach einem der voranstehenden Ansprüche, **dadurch gekennzeichnet, dass** der Laufflächenabschnitt (16) mit genau zwei Umfangssegmenten (32, 34) ausgebildet ist, die insbesondere beide eine Umfangserstreckung von 180° aufweisen, wobei die Umfangssegmente (32, 34) vorzugsweise identische Grundelemente (120) aufweisen, und wobei vorzugsweise an jedem der beiden Umfangssegmente (32, 34) genau zwei Spannmittel (38), die jeweils schwenkbare Hakenelemente (44) umfassen, angeordnet sind.

7. Aufsatz (14) nach Anspruch 6, **dadurch gekennzeichnet, dass** das bzw. jedes Spannmittel (38) als Fertigteil (123) ausgebildet und an dem Grundelement (120) des zugehörigen Umfangssegments (32, 34) angebracht ist.

8. Aufsatz (14) nach dem voranstehenden Anspruch, **dadurch gekennzeichnet, dass** das Fertigteil (123) den Kontaktabschnitt (54) umfasst.

9. Aufsatz (14) nach einem der voranstehenden Ansprüche, **dadurch gekennzeichnet, dass** der Abschnitt der Felge (2) ein Felgenhorn (10) ist.

10. Aufsatz (14) nach einem der voranstehenden Ansprüche, **dadurch gekennzeichnet, dass** das Spannmittel (38) durch ein schwenkbar gelagertes Hakenelement (44) mit einem Hintergriffabschnitt (46) gebildet ist, wobei der Hintergriffabschnitt (46) ein Felgenhorn (10) der Felge (2) hintergreift, wenn das Spannmittel (38) im Hintergriff mit dem Felgenhorn (10) steht, wobei an dem Hakenelement (44) ein Betätigungsabschnitt (48) angeordnet ist, der starr mit dem Hintergriffabschnitt (46) verbunden ist.

11. Aufsatz (14) nach einem der voranstehenden Ansprüche, **dadurch gekennzeichnet, dass** der Aufsatz (14) ein Kontaktelement (52) aufweist, an dem der Kontaktabschnitt (54) angeordnet ist, wobei das Kontaktelement (52) separat von dem Spannmittel (38) ausgebildet und in axialer Richtung (A) verschiebbar bzw. verschwenkbar an dem Aufsatz (14), vorzugsweise am Laufflächenabschnitt (16), angeordnet ist.

12. Aufsatz (14) nach einem der voranstehenden Ansprüche, **dadurch gekennzeichnet, dass** der Aufsatz (14) einen Verriegelungsmechanismus (56) umfasst, der dazu ausgebildet und angeordnet ist, das Spannmittel (38) zu verriegeln, wenn es sich im Hintergriff mit dem Felgenhorn (10) befindet.

13. Aufsatz (14) nach dem voranstehenden Anspruch, **dadurch gekennzeichnet, dass** der Verriegelungsmechanismus (56) dazu ausgebildet ist, mit einem Sicherungsabschnitt (66) bei am Fahrzeugrad (1) angebrachtem Aufsatz (14) und sich drehendem Fahrzeugrad (1) die Fahrbahn zu kontaktieren und dadurch den Sicherungsabschnitt (66) zu betätigen, insbesondere mit einer radial einwärts gerichteten Kraft zu beaufschlagen, wobei der Verriegelungsmechanismus (56) derart ausgebildet ist, dass ein Sicherungselement (68) bei Betätigung des Sicherungsabschnitts (66) in eine Sicherungsposition (SP) bewegt wird, in der es formschlüssig gehalten ist, und aus der es vorzugsweise nur mittels eines Werkzeugs lösbar ist, wobei das Sicherungselement (68) in der Sicherungsposition (SP) das Spannmittel (38) in der Hintergriffstellung mit dem Felgenhorn (10) formschlüssig verriegelt.

14. Aufsatz (14) nach einem der voranstehenden Ansprüche, **dadurch gekennzeichnet, dass** der Initialmontageabschnitt (20) wenigstens einen in axialer Richtung (A) verlaufenden, vorzugsweise zapfenartigen, Führungsvorsprung (84) umfasst und der Laufflächenabschnitt (16) wenigstens eine Führungsöffnung (86) umfasst, die komplementär zu dem Führungsvorsprung (84) ausgebildet ist, so dass bei am Fahrzeugrad (1) angebrachten Initialmontageabschnitt (20) der Laufflächenabschnitt (16) bzw. ein Teil des Laufflächenabschnitts (16) derart auf den Initialmontageabschnitt (20) aufgesetzt werden kann, dass der Führungsvorsprung (84) in die Führungsöffnung (86) eingreift und eine axiale Montagebewegung des Laufflächenabschnitts (16) gegenüber dem Initialmontageabschnitt (20) und dem Fahrzeugrad (1) durch den Eingriff des Führungsvorsprungs (84) in die Führungsöffnung (86) geführt ist.

15. Aufsatz (14) nach einem der voranstehenden Ansprüche, **dadurch gekennzeichnet, dass** der Initialmontageabschnitt (20) mehrere sich nach radial außen erstreckende Streben (88) umfasst, die jeweils wenigstens einen Führungsvorsprung (84) aufweisen.

16. Aufsatz (14) nach dem voranstehenden Anspruch, **dadurch gekennzeichnet, dass** der Laufflächenabschnitt (16) mittels einer Befestigungseinrichtung (90) am Initialmontageabschnitt (20) lösbar befestigbar ist, wobei die Befestigungseinrichtung (90) vorzugsweise derart ausgebildet ist, dass sich der Laufflächenabschnitt (16) beim Befestigen an dem Initialmontageabschnitt (20) in einer axialen Richtung (A) zur Felge (2) hin bewegt.

17. Aufsatz (14) nach einem der voranstehenden Ansprüche, **dadurch gekennzeichnet, dass** der Laufflächenabschnitt (16) mehrere in radialer Richtung (R) verlaufende und durch Zwischenräume (94) beabstandete speichenartige Streben (96) umfasst, wobei die Zwischenräume (94) wenigstens bezogen auf einen Radius (98) eine Umfangserstreckung (100) aufweisen, die größer ist als die Umfangserstreckung (102) der Streben (96).

18. Aufsatz (14) nach einem der voranstehenden Ansprüche, **dadurch gekennzeichnet, dass** der Initialmontageabschnitt (20) dazu ausgebildet ist, mittels eines formschlüssigen Hintergriffs einer Greifeinrichtung (22) und/oder eines kraftschlüssigen Eingriffs der Greifeinrichtung (22) mit einer Öffnung (13) in der Felge (2), die im Bereich des Lochkreises (4) angeordnet ist, am Fahrzeugrad befestigt zu werden, wobei die Öffnung (13) von Löchern (7), die zur Aufnahme von Radschrauben bzw. Stehbolzen in der Felge (2) vorgesehen sind, beabstandet in der Felge (2) angeordnet ist.

19. Aufsatz (14) nach Anspruch 18, **dadurch gekennzeichnet, dass** die Greifeinrichtung (22) einen erweiterbaren Abschnitt (24) umfasst, der vorzugsweise dazu ausgebildet ist, die Öffnung (13) im Bereich des Lochkreises (4) zu hintergreifen und/oder dass die Greifeinrichtung (22) einen komprimierbaren Abschnitt umfasst, der dazu ausgebildet ist, im komprimierten Zustand durch die Öffnung (13) im Bereich des Lochkreises (4) geführt zu werden und sich in einen unkomprimierten Zustand zu erweitern, wenn er durch die Öffnung (13) geführt ist.

20. Aufsatz (14) nach einem der voranstehenden Ansprüche, **dadurch gekennzeichnet, dass** der Initialmontageabschnitt (20) mit Einsteckelementen (130) und Spreizelementen (132) an dem Fahrzeugrad (1) anbringbar ist, wobei die Einsteckelemente (130) in die Öffnungen (13) eingeführt werden und in einem zweiten Schritt die Spreizelemente (132) durch einen entsprechenden Betätigungsmechanismus, der an dem Initialmontageabschnitt (20) angeordnet ist, betätigt und in die Einsteckelemente (130) eingefahren werden können, um die Einsteckelemente (130) durch formschlüssigen Hintergriff oder kraftschlüssigen Eingriff in den Öffnungen (13) fest zu fixieren.

21. Aufsatz (14) nach einem der voranstehenden Ansprüche, **dadurch gekennzeichnet, dass** der Initialmontageabschnitt (20) mehrere in Umfangsrichtung (U) verteilt angeordnete Spannmittel (38) aufweist, wobei der Initialmontageabschnitt (20) vorzugsweise eine kreuzartige Struktur (108) mit sich radial auswärts erstreckenden Streben (109) aufweist, und wobei vorzugsweise wenigstens eines der Spannmittel (38) in radialer Richtung (R) beweglich an dem Initialmontageabschnitt 20 angeordnet ist.

22. Aufsatz (14) nach Anspruch 21, **dadurch gekennzeichnet, dass** die Spannmittel in verschiedenen radial voneinander beabstandeten Positionsstufen, die auf unterschiedliche Felgendurchmesser abgestimmt sind, am Aufsatz (14) festlegbar sind, wobei vorzugsweise wenigstens ein Spannmittel (38) in den Positionsstufen in radialer Richtung (R) beweglich ist, jedoch weniger weit als die radial voneinander beabstandeten Positionsstufen in radialer Richtung (R) voneinander beabstandet sind.

## Claims

1. Attachment (14) for a vehicle wheel (1) comprising a rim (2) for enabling a driving operation with a restricted tire function, wherein the attachment (14) has a tread section (16) with a tread (18), and wherein the attachment (14) comprises at least one clamping device (38), which is designed to engage behind a section of the rim (2), wherein the attachment (14) further comprises an initial mounting section (20), and at least a part of the tread section (16) is designed separately from the initial mounting section (20) and connectably to this in a detachable manner or is designed to be connected movably to the initial mounting section (20), wherein the initial mounting section (20) is designed for an arrangement lying radially internally with regard to the tread (18) when the attachment (14) is fastened on the vehicle wheel (1), **characterized in that** the attachment (14) comprises a contact section (54), which is designed to actuate the clamping device (38) and bring it into rear engagement with the section (10, 11) of the rim (2) when the contact section (54) is actuated, and wherein the contact section (54) is arranged on the tread section (16) and is designed and arranged so that, when the tread section (16) is affixed on the vehicle wheel (1), it contacts the vehicle wheel (1) and is actuated by this contact, or wherein the contact section (54) is arranged on the initial mounting section (20) and is designed and arranged so that, when the initial mounting section (20) is affixed on the vehicle wheel (1), it contacts the vehicle wheel (1) and is actuated by this contact.

2. Attachment (14) according to the preceding claim, **characterised in that** the clamping device (38) is arranged on the tread section (16) and/or on the initial mounting section (20).

3. Attachment (14) according to one of the preceding claims, **characterised in that** the contact section (54) contacts the rim (2) of the vehicle wheel (1) when the attachment (14) is affixed to the vehicle wheel (1).

4. Attachment (14) according to any one of the preceding claims, **characterised in that** the tread section, seen in circumferential direction (U), has at least two segments (32, 34) respectively comprising a portion of the circumference of the tread (18), which segments are detachable from one another or are pivotable or displaceable relative to one another.

5. Attachment (14) according to any one of the preceding claims, **characterised in that** the contact section (54) is arranged on the side of the attachment (14) facing the vehicle wheel (1) when the attachment (14) is fastened to the vehicle wheel (1).

6. Attachment (14) according to any one of the preceding claims, **characterised in that** the tread section (16) is designed with precisely two circumferential segments (32, 34), which in particular both have a circumferential extension of 180°, wherein the circumferential segments (32, 34) preferably have identical base elements (120), and wherein preferably arranged on each of the two circumferential segments (32, 34) are precisely two clamping devices (38), which each comprise pivotable hook elements (44).

7. Attachment (14) according to claim 6, **characterised in that** the or each clamping device (38) is designed as a prefabricated part (123) and is affixed to the base element (120) of the associated circumferential segment (32, 34).

8. Attachment (14) according to the preceding claim, **characterised in that** the prefabricated part (123) comprises the contact section (54).

9. Attachment (14) according to any one of the preceding claims, **characterised in that** the section of the rim (2) is a rim flange (10).

10. Attachment (14) according to any one of the preceding claims, **characterised in that** the clamping device (38) is formed by a pivoted hook element (44) with a rear grip section (46), wherein the rear grip section (46) engages behind a rim flange (10) of the rim (2) when the clamping device (38) is in rear engagement with the rim flange (10), wherein arranged on the hook element (44) is an actuation section (48), which is connected rigidly to the rear grip section (46).

11. Attachment (14) according to any one of the preceding claims, **characterised in that** the attachment (14) has a contact element (52) on which the contact section (54) is arranged, wherein the contact element (52) is designed separately from the clamping device (38) and is arranged displaceably or pivotably in axial direction (A) on the attachment (14), preferably on the tread section (16).

12. Attachment (14) according to any one of the preceding claims, **characterised in that** the attachment (14) comprises a locking mechanism (56), which is designed and arranged to lock the clamping device (38) when it is in rear engagement with the rim flange (10).

13. Attachment (14) according to the preceding claim, **characterised in that** the locking mechanism (56) is designed to contact the road with a securing section (66) when the attachment (14) is affixed to the vehicle wheel (1) and the vehicle wheel (1) is rotating and thereby to actuate the securing section (66), in particular to act upon it with a force directed radially inwards, wherein the locking mechanism (56) is designed so that a securing element (68) is moved upon actuation of the securing section (66) into a securing position (SP), in which it is held positively and from which it can preferably only be released by means of a tool, wherein the securing element (68) locks the clamping device (38) positively in the rear engagement position with the rim flange (10) in the securing position (SP).

14. Attachment (14) according to any one of the preceding claims, **characterised in that** the initial mounting section (20) comprises at least one, preferably pin-like, guide projection (84) running in axial direction (A) and the tread section (16) comprises at least one guide opening (86), which is designed complementary to the guide projection (84), so that when the initial mounting section (20) is affixed to the vehicle wheel (1), the tread section (16) or a portion of the tread section (16) can be placed onto the initial mounting section (20) in such a way that the guide projection (84) engages in the guide opening (86) and an axial assembly movement of the tread section (16) relative to the initial mounting section (20) and the vehicle wheel (1) is guided by the engagement of the guide projection (84) in the guide opening (86).

15. Attachment (14) according to any one of the preceding claims, **characterised in that** the initial mounting section (20) comprises several struts (88) extending radially outwards, which each have at least one guide projection (84).

16. Attachment (14) according to the preceding claim, **characterised in that** the tread section (16) can be fastened detachably on the initial mounting section (20) by means of a fastening device (90), wherein the fastening device (90) is designed preferably so that the tread section (16) moves when fastened to the initial mounting section (20) in an axial direction (A) towards the rim (2).

17. Attachment (14) according to any one of the preceding claims, **characterised in that** the tread section (16) comprises several spoke-like struts (96) running in radial direction (R) and spaced by gaps (94), wherein the gaps (94) have a circumferential extension (100), at least with reference to a radius (98), that is greater than the circumferential extension (102) of the struts (96).

18. Attachment (14) according to any one of the preceding claims, **characterised in that** the initial mounting section (20) is designed to be fastened to the vehicle wheel by means of a positive rear engagement of a gripping device (22) and/or a frictional engagement of the gripping device (22) with an opening (13) in the rim (2), which opening is arranged in the region of the bolt pattern (4), wherein the opening (13) is arranged spaced at a distance in the rim (2) from holes (7) provided to receive wheel bolts or stay bolts in the rim (2).

19. Attachment (14) according to claim 18, **characterised in that** the gripping device (22) comprises an expandable section (24), which is preferably designed to engage behind the opening (13) in the region of the bolt pattern (4) and/or that the gripping device (22) comprises a compressible section, which is designed to be guided in the compressed state through the opening (13) in the region of the bolt pattern (4) and to expand into an uncompressed state when it is guided through the opening (13).

20. Attachment (14) according to any one of the preceding claims, **characterised in that** the initial mounting section (20) can be affixed to the vehicle wheel (1) by plug-in elements (130) and spreading elements (132), wherein the plug-in elements (130) are introduced into the openings (13) and in a second step the spreading elements (132) can be actuated by a corresponding actuating mechanism, which is arranged on the initial mounting section (20), and can be inserted into the plug-in elements (130) in order to fix the plug-in elements (130) firmly in the openings (13) by positive rear engagement or frictional engagement.

21. Attachment (14) according to any one of the preceding claims, **characterised in that** the initial mounting section (20) has several clamping devices (38) arranged distributed in circumferential direction (U), wherein the initial mounting section (20) preferably has a crosswise structure (108) with struts (109) extending radially outwards, and wherein preferably at least one of the clamping devices (38) is arranged movably in radial direction (R) on the initial mounting section 20.

22. Attachment (14) according to claim 21, **characterised in that** the clamping devices can be fixed in different position stages spaced radially at a distance from one another, which stages are coordinated to different rim diameters, on the attachment (14), wherein preferably at least one clamping device (38) is movable in the position stages in radial direction (R), but less far than the position stages spaced radially at a distance from one another are spaced at a distance from one another in radial direction (R).

## Revendications

1. Insert (14) pour une roue de véhicule (1) comprenant une jante (2) pour permettre une condition de roulage en cas de fonctionnement limité d'un pneu, l'insert (14) présentant une section de bande de roulement (16) avec une bande de roulement (18), et l'insert (14) comprenant au moins un moyen de serrage (38) qui est conçu pour venir se bloquer sur l'arrière d'une section de la jante (2), l'insert (14) comprenant aussi une section de montage initial (20) et au moins une partie de la section de bande de roulement (16) étant séparée de la section de montage initial (20) et est conçue pour pouvoir être solidarisée à celle-ci de manière amovible, ou est conçue pour être solidarisée mobile à la section de montage initial (20), la section de montage initial (20) étant conçue pour une disposition intérieure radiale par rapport à la bande de roulement (18) lorsque l'insert (14) est fixé à la roue de véhicule (1),
**caractérisé en ce que** l'insert (14) comprend une section de contact (54), qui est conçu pour actionner le moyen de serrage (38) et pour amener la section (10, 11) à se bloquer à l'arrière de la section (10 11) de la jante (2) lorsque la section de contact (54) est actionnée, et la section de contact (54) étant disposée sur la section de bande de roulement (16) et étant conçue de telle sorte qu'elle entre en contact avec la roue de véhicule (1) lorsque la section de bande de roulement (16) est amenée sur la roue de véhicule (1) et est actionnée par ce contact, ou la section de contact (54) est disposé sur la section de montage initial (20) et est conçue et disposée de telle sorte qu'elle entre en contact avec la roue de véhicule (1), lorsque la section de montage initial (20) est montée sur la roue de véhicule (1), et est actionnée par ce contact.

2. Insert (14) selon la revendication précédente, **caractérisé en ce que** le moyen de serrage (38) est disposé sur la section de bande de roulement (16) et/ou sur la section de montage initial (20).

3. Insert (14) selon l'une quelconque des revendications précédentes, **caractérisé en ce que** la section de contact (54) entre en contact avec la jante (2) de la roue de véhicule (1) lorsque l'insert (14) est monté sur la roue de véhicule (1).

4. Insert (14) selon l'une quelconque des revendications précédentes, **caractérisé en ce que** la section de bande de roulement lorsqu'elle est vue dans la direction circonférentielle (U), comporte au moins deux segments (32, 34) comprenant respectivement une partie de la circonférence de la bande de roulement (18), lesdits segments pouvant pivoter ou se déplacer les uns par rapport aux autres de manière amovible.

5. Insert (14) selon l'une quelconque des revendications précédentes, **caractérisé en ce que** la section de contact (54) est disposée sur le côté orienté vers la roue de véhicule (1) lorsque l'insert (14) est fixé à la roue de véhicule (1).

6. Insert (14) selon l'une quelconque des revendications précédentes, **caractérisé en ce que** la section de bande de roulement (16) est conçu précisément avec deux segments circonférentiels (32, 34) qui présentent chacun une étendue circonférentielle de 180°, les segments circonférentiels (32, 34) présentant de préférence des éléments de base identiques (120) et, de préférence sur chacun des deux segments circonférentiels (32, 34) sont disposés précisément deux moyens de serrage (38), qui comprennent respectivement des éléments de crochet pivotables (44).

7. Insert (14) selon la revendication 6, **caractérisé en ce que** le ou chaque moyen de serrage (38) est conçu sous la forme d'un élément préfabriqué (123) et est monté sur l'élément de base (120) du segment circonférentiel correspondant (32, 34).

8. Insert (14) selon la revendication précédente, **caractérisé en ce que** l'élément préfabriqué (123) comprend la section de contact.

9. Insert (14) selon l'une quelconque des revendications précédentes, **caractérisé en ce que** la section de la jante (2) est un rebord (10) de la jante.

10. Insert (14) selon l'une quelconque des revendications précédentes, **caractérisé en ce que** le moyen de serrage (38) est formé par un élément de crochet (44) monté pivotant avec une section de blocage par l'arrière (46), la section de blocage par l'arrière (46) vient bloquer un rebord (10) de la jante (2) par l'arrière, lorsque le moyen de serrage (38) est en retenue par l'arrière avec le rebord (10), une section d'actionnement (48) étant disposée sur l'élément de crochet (44) laquelle est reliée rigidement à la section de blocage par l'arrière (46).

11. Insert (14) selon l'une quelconque des revendications précédentes, **caractérisé en ce que** l'insert (14) comporte un élément de contact (52) sur lequel est disposée la section de contact (54), l'élément de contact (52) étant conçu séparément du moyen de serrage (38) et étant disposé pivotant ou de manière à se déplacer sur l'insert (14), de préférence sur la section de bande de roulement (16).

12. Insert (14) selon l'une quelconque des revendications précédentes, **caractérisé en ce que** l'insert (14) comprend un mécanisme de verrouillage (56) qui est conçu et disposé pour verrouiller le moyen de serrage (38) lorsqu'il se trouve en retenue par l'arrière avec le rebord (10) de jante.

13. Insert (14) selon la revendication précédente, **caractérisé en ce que** le mécanisme de verrouillage (56) est conçu pour, avec une section de sûreté (66) lorsque l'insert est monté sur la roue de véhicule (1), entrer en contact avec la bande de roulement lorsque la roue tourne (1) et ainsi actionner la section de sûreté (66), en particulier pour être soumis à une force orientée radialement vers l'intérieur, le mécanisme de verrouillage (56) étant conçu de sorte qu'un élément de sûreté (68) est déplacé, lors de l'actionnement de la section de sûreté (66), dans une position de sûreté (SP) dans laquelle il est maintenu par complémentarité de forme et peut être libéré de cette dernière de préférence uniquement au moyen d'un outil, l'élément de sûreté (68) verrouillant par complémentarité de forme dans la position de sûreté (SP) le moyen de serrage (38) dans la position de retenue par l'arrière avec le rebord (10) de jante.

14. Insert (14) selon l'une quelconque des revendications précédentes, **caractérisé en ce que** la section de montage initial (20) comprend au moins une saillie de guidage (84), de préférence sous forme de tenon, s'étendant dans la direction axiale (A) et la section de bande de roulement (16) comprend au moins une ouverture de guidage (86) qui est conçue en complément de la saillie de guidage (84) de manière à, lorsque la section de montage initial (20) est montée sur la roue de véhicule (1), ce que la section de bande de roulement (16) ou une partie de la section de bande de roulement (16) puisse se poser sur la section de montage initial (20) de sorte que la saillie de guidage (84) s'introduise dans l'ouverture de guidage (86) et un mouvement de montage axiale de la section de bande de roulement (16) est guidé par rapport à la section de montage initial (20) et à la roue de véhicule (1) par l'introduction de la saillie de guidage (84) dans l'ouverture de guidage (86).

15. Insert (14) selon l'une quelconque des revendications précédentes, **caractérisé en ce que** la section de montage initial (20) comprend plusieurs entretoises s'étendant radialement vers l'extérieur (88) qui présentent respectivement au moins une saillie de guidage (84).

16. Insert (14) selon la revendication précédente, **caractérisé en ce que** la section de bande de roulement (16) peut être fixée amovible au moyen d'un dispositif de fixation (90) sur la section de montage initial (20), le dispositif de fixation (90) étant conçu de préférence de sorte que la section de bande de roulement (16) se déplace, lors de la fixation sur la section de montage initial (20), dans une direction axiale (A) vers la jante (2).

17. Insert (14) selon l'une quelconque des revendications précédentes, **caractérisé en ce que** la section de bande de roulement (16) comprend plusieurs entretoises (96) de type rayon espacés par des espaces intermédiaires (94) et s'étendant dans la direction radiale (R), les espaces intermédiaires (94) par rapport à un rayon (98) présentent une étendue circonférentielle (100) qui est supérieure à l'étendue circonférentielle (102) des entretoises (96).

18. Insert (14) selon l'une quelconque des revendications précédentes, **caractérisé en ce que** la section de montage initial (20) est conçue, au moyen d'une retenue par l'arrière par complémentarité de forme d'un dispositif de préhension (22) et/ou par un contact à force du dispositif de préhension (22) avec une ouverture (13) dans la jante (2) qui est disposée dans la zone du cercle de boulonnage (4), pour être fixée sur la roue de véhicule, l'ouverture (13) qui sont prévus pour loger les boulons de roue ou les goujons filetés dans la jante (2), étant disposée dans la jante (2) à l'écart des trous (7).

19. Insert (14) selon la revendication 18, **caractérisé en ce que** le dispositif de préhension (22) comprend une section (24) pouvant s'élargir, qui est de préférence conçue pour bloquer l'ouverture (13) par l'arrière dans la zone du cercle de boulonnage (4) et/ou **en ce que** le dispositif d'emboîtement (22) comprend une section pouvant être comprimée qui, lorsqu'elle est comprimée, est conçue pour être guidée dans l'ouverture (13) dans la zone du cercle de boulonnage (4) et pour s'élargir lorsqu'elle n'est pas comprimée, lorsqu'elle est guidée dans l'ouverture (13).

20. Insert (14) selon l'une quelconque des revendications précédentes, **caractérisé en ce que** la section de montage initial (20) peut être montée avec des éléments d'insertion (130) et des éléments d'écartement (132) sur la roue de véhicule (1), les éléments d'insertion (130) sont insérés dans les ouvertures (13) et dans une seconde étape les éléments d'écartement(132) sont actionnés par un mécanisme d'actionnement correspondant, qui est disposé sur la section de montage initial (20), et peuvent être introduits dans les éléments d'insertion (130) pour fixer solidement les éléments d'insertion (130) par retenue par l'arrière par complémentarité de forme ou à force dans les ouvertures (13).

21. Insert (14) selon l'une quelconque des revendications précédentes, **caractérisé en ce que** la section de montage initial (20) comporte plusieurs moyens de serrage (38) répartis dans la direction concironférentielle (U), la section de montage initial (20) comportant de préférence une structure (108) en forme de croix avec des entretoises (109) s'étendant radialement vers l'extérieur, et de préférence au moins l'un des moyens de serrage (38) étant disposé mobile sur la section de montage initial (20) dans la direction radiale (R).

22. Insert (14) selon la revendication 21, **caractérisé en ce que** les moyens de serrage, peuvent être fixés sur l'insert (14) à différents niveaux de position écartés radialement les uns des autres, qui sont adaptées aux différents diamètres de jante, de préférence au moins un moyen de serrage (38) pouvant se déplacer dans les niveaux de position dans la direction radiale (R), écartées les uns des autres cependant à un moins grand degrés que les niveaux de position écartées les uns des autres radialement dans la direction radiale (R).
